# EUROPEAN PATENT APPLICATION

(11) **EP 1 607 229 A1**
(43) Date of publication of application: **21.12.2005**
(21) Application number: 04724143.5
(22) Date of filing: 29.03.2004
(51) Int. Cl.: B41J 21/00

(54) **PRINT DEVICE, OUTPUT DEVICE, AND SCRIPT GENERATION METHOD**

(30) Priority: 27.03.2003 JP 2003089111; 27.03.2003 JP 2003089110
(71) Applicant: SEIKO EPSON CORPORATION, Shinjuku-ku, Tokyo 163-0811 (JP)
(72) Inventor: MIYAZAWA, Shunsaku, SEIKO EPSON CORPORATION, Suwa-shi, Nagano 3928502 (JP); OSHIMA, Yasuhiro, SEIKO EPSON CORPORATION, Suwa-shi, Nagano 3928502 (JP)
(74) Representative: Cloughley, Peter Andrew
(86) International application number: PCT/JP2004/004404
(87) International publication number: WO 2004/085163

(57) **Abstract**

The technique of the invention sets a first image plane 70 having an information volume per pixel set to 4 bytes and a second image plane 72 having the information volume per pixel set to 1 byte. The area of each image plane is set to a printing area. Full color images are drawn on the first image plane 70, whereas characters and simple illustrations are drawn on the second image plane 72. The technique combines the first image plane 70 with the second image place 72 to a composite image plane, further lays an operation image plane 74, which has the information volume per pixel set to 4 bits and is used to display information required for a device operation, upon the composite image plane to a composite display window 76. RGB data is output to display the composite display window 76 on a monitor. The contents of the first image plane 70 and the second image plane 72 are described in a script. The technique of the invention analyzes the script and prints generated images based on the results of the analysis.

## Description

### Technical Field

The present invention relates to a printing device, an output device, a script generation method, an output method, an image data editing method, and corresponding programs.

### Background Art

A proposed printing device displays images read from a storage device on a TV screen for domestic use and prints the displayed images after required editing operations including expansion and contraction (see, for example, Matsushita Electric Industrial Co., Ltd. 'Panasonic Home Photo Printer SV-AP10, the Internet
<URL:http://prodb.matsushita.co.jp/products/panasonic /SV/SV-AP10.html> and
<URL:http://prodb.matsushita.co.jp/products/panasonic /SV/SV-AP10 s.html> [retrieved on March 4, 2003]). This proposed printing device sets the display area on the TV screen to a printing area, lays out images read from a storage device in the printing area, and prints the laid out images after required editing operations, for example, a change of the layout of the images, expansion and contraction of the images, rotation of the images, and entry of character strings.

A proposed application software program functions to display multiple image planes with images drawn thereon in an overlapping manner as a composite image plane and to print the combined images on the composite image plane (see, for example, 'Chishiki Zerokara Haj imeru Adobe Photoshop 6 de Dej itaru Gazo ga Jiyujizai' (Adobe Photoshop 6 enables any person without specific knowledge to freely edit and print digital images), p 53-p56, Reiko Nakata, BNN Corp., January 15, 2001). This application software program is installed and activated in the computer to display multiple image planes, for example, an image plane with object images drawn thereon and another image plane with a background image drawn thereon, in an overlapping manner as a composite image plane. The combined images on the composite image plane may be printed with a printing device, such as a printer.

The prior art printing device does not have the function of displaying multiple image planes in an overlapping manner as a composite image plane for editing. The lack of this function may require an undesirably long time for editing or may result in failed editing. The application software program may be adopted in this prior art printing device to display multiple image planes in an overlapping manner. This arrangement, however, requires the printing device to have a large memory capacity for displaying the multiple image planes in the overlapping manner. When the user desires to print only a selected area out of the whole area of an edited image plane, the prior art printing device requires the user to delete the images drawn in a residual area other than the selected area for printing. This operation is rather time-consuming.

### Disclosure of the Invention

The object of the invention is to provide a printing device that edits images on multiple image planes with small memory capacities and prints the edited images. The printing device of the invention aims to increase a processing speed for editing images. The printing device of the invention also aims to readily print only a selected arbitrary area out of the whole area of an edited image plane. The printing device of the invention further aims to edit images and set a printing area on multiple image planes with small memory capacities. The printing device of the invention also aims to increase a processing speed for editing images and setting a printing area.

The object of the invention is to provide an output device that edits images on multiple image planes with small memory capacities and outputs the edited images. The output device of the invention aims to increase a processing speed for editing images. The output device of the invention also aims to readily output only a selected arbitrary area out of the whole area of an edited image plane. The output device of the invention further aims to edit images and set an output area on multiple image planes with small memory capacities. The output device of the invention also aims to increase a processing speed for editing images and setting an output area.

The script generation method of the invention aims to generate a script structured according to a layout for printing. The script generation method of the invention also aims to generate a script at a high speed.

The output method of the invention aims to analyze a script and output images on a medium, such as paper, based on the results of the analysis. The output method of the invention also aims to analyze a script, correct an object image specified by the script, and output the corrected object image.

The data editing method of the invention aims to send editable image data to an output device without generating output data that does not require any further processing prior to output by the output device.

In order to attain at least part of the above and the other related objects, the configurations discussed below are applied to the printing device, the output device, the script generation method, the output method, and the image data editing method of the invention.

The present invention is directed to a first printing device that prints picture images and characters on a printing medium, such as paper. The first printing device includes: an image plane information storage module that stores information, which regards multiple image planes having different information volumes per pixel, in memory regions allocated to the multiple image planes; a drawing editing module that draws selected part of the picture images and the characters on each of the multiple image planes accompanied with storage of data representing the selected part of the picture images and the characters in a corresponding memory region allocated to the image plane, and edits the selected part of the picture images and the characters drawn on the image plane; a display data generation module that combines the multiple image planes to one composite display window, based on the information stored in the image plane information storage module, and generates display data representing the composite display window; and a print data generation module that combines at least two image planes out of the multiple image planes to one composite print window, based on the information stored in the image plane information storage module, and generates print data representing the composite print window.

The first printing device of the invention draws and edits picture images and characters on the multiple image planes having different information volumes per pixel. This arrangement desirably reduces the required memory capacity and shortens the time required for drawing and editing, compared with the prior art structure that uses multiple image planes having large information volumes per pixel to draw and edit images and characters. Images having large information volumes per pixel are drawn on the image plane having a large information volume per pixel, whereas images having small information volumes per pixel are drawn on the image plane having a small information volume per pixel. The first printing device combines the multiple image planes to the composite display window and generates the display data representing the composite display window. A display device inputs the display data and displays the combined images according to the input display data. The first printing device also combines the multiple image planes to the composite print window and generates the print data representing the composite print window. The combined images are printed according to the generated print data. The printing device may be any of various printers, for example, an inkjet printer.

In the first printing device of the invention, the multiple image planes may include a picture image plane having the information volume per pixel set to a first information volume for drawing a color picture image, and a character image plane having the information volume per pixel set to a second information volume, which is lower than the first information volume, for drawing at least either of a character and a simple illustration, and the print data generation module may combine at least the picture image plane with the character image plane to the composite print window and generates the print data representing the composite print window. The arrangement of this embodiment uses the image plane for drawing color images and the image plane for drawing characters and simple illustrations to draw and edit the images and to print the drawn and edited images.

In the preferable embodiment of the first printing device of the invention that uses the picture image plane and the character image plane, the display data generation module may lay the character image plane on the picture image plane to the composite display window and generate the display data representing the composite display window, and the print data generation module may lay the character image plane on the picture image plane to the composite print window and generate the print data representing the composite print window.

In another preferable embodiment of the first printing device of the invention that uses the picture image plane and the character image plane, the first information volume may enable each picture image to be displayed in full color, and the second information volume may allow for display of color information having a volume of not greater than half the first information volume. In this case, the first information volume may be 4 bytes, and the second information volume may be 1 byte.

In still another preferable embodiment of the first printing device of the invention that uses the picture image plane and the character image plane, the multiple image planes may further include an operation image plane for drawing information on a device operation, the display data generation module may lay the operation image plane as an upper-most layer of the composite display window and generate the display data representing the composite display window, and the print data generation module may combine the image planes other than the operation image plane to the composite print window and generate the print data representing the composite print window. This arrangement enables the information on the device operation to be drawn on the operation image plane. In the printing device of this embodiment, the operation image plane may have the information volume per pixel set to a third information volume, which is lower than the second information volume. In this case, the third information volume may be 4 bits.

In still another preferable embodiment of the first printing device of the invention that uses the picture image plane and the character image plane, the drawing editing module may acquire each picture image and draw the acquired picture image on the picture image plane.

In still another preferable embodiment of the first printing device of the invention that uses the picture image plane and the character image plane, the drawing editing module, in response to an image drawing instruction, may set a movable outer frame for image layout on the character image plane and draw a picture image in a specific area on the picture image plane corresponding to the outer frame. This arrangement accelerates the image layout.

In still another preferable embodiment of the first printing device of the invention that uses the picture image plane and the character image plane, the drawing editing module, in response to an image layout change instruction, may display an outer frame for image layout at a specific position on the character image plane, which corresponds to contour of a picture image drawn on the picture image plane, change the displayed outer frame for image layout, and redraw the picture image in a specific area on the picture image plane corresponding to the changed outer frame. This arrangement accelerates the change of the image layout.

In still another preferable embodiment of the first printing device of the invention that uses the picture image plane and the character image plane, the drawing editing module may draw a character string on the character image plane and handles the drawn character string as a character image for subsequent processing. This arrangement enables the drawn character string to be handled as an image for subsequent processing.

In the first printing device of the invention, the drawing editing module may allocates plural drawing objects, such as picture images and characters, to the multiple image planes and generate a script file described in a language of selected format with regard to the allocation of the plural drawing objects, and the print data generation module may analyze the script file to generate the print data. In the printing device of this embodiment, the drawing editing module may describe the allocation of the plural drawing objects with regard to each of the multiple image planes and generate the script file. In the first printing device of this embodiment, the display data generation module may analyze the script file to generate the display data. The 'script file' may include object identification information for identifying each drawing object to be drawn on the image plane and layout information representing a layout of each drawing object on the image plane. The object identification information may be, for example, a storage location and a file name of each drawing object or may be a number or a symbol allocated to each drawing object.

In the first printing device of the invention, the drawing editing module may perform the drawing and editing in response to reception of electromagnetic wave from an operating panel manipulated by a user. This arrangement facilitates drawing and editing of the images.

Further, in the first printing device of the invention, the display data generation module may convert pixel information on each pixel in each of the multiple image planes into corresponding pixel information of a maximum information volume per pixel adopted in at least one image plane among the multiple image planes having the different information volumes per pixel, and generate the display data representing the composite display window. Also, the print data generation module may convert pixel information on each pixel in each of the multiple image planes into corresponding pixel information of a maximum information volume per pixel adopted in at least one image plane among the multiple image planes having the different information volumes per pixel, and generate the print data representing the composite print window.

In the first printing device of the invention, the display data generation module may output RGB data as the display data. This arrangement enables a general device to be used as a display device.

The present invention is also directed to a first output device that outputs picture images and characters. The first output device includes: an image plane information storage module that stores information, which regards multiple image planes having different information volumes per pixel, in memory regions allocated to the multiple image planes; a drawing editing module that draws selected part of the picture images and the characters on each of the multiple image planes accompanied with storage of data representing the selected part of the picture images and the characters in a corresponding memory region allocated to the image plane, and edits the selected part of the picture images and the characters drawn on the image plane; a display data generation module that combines the multiple image planes to one composite display window, based on the information stored in the image plane information storage module, and generates display data representing the composite display window; and an output data generation module that combines at least two image planes out of the multiple image planes to one composite output window, based on the information stored in the image plane information storage module, and generates output data representing the composite output window.

The first output device of the invention draws and edits picture images and characters on the multiple image planes having different information volumes per pixel. This arrangement desirably reduces the required memory capacity and shortens the time required for drawing and editing, compared with the prior art structure that uses multiple image planes having large information volumes per pixel to draw and edit images and characters. Images having large information volumes per pixel are drawn on the image plane having a large information volume per pixel, whereas images having small information volumes per pixel are drawn on the image plane having a small information volume per pixel. The first output device combines the multiple image planes to the composite display window and generates the display data representing the composite display window. A display device inputs the display data and displays the combined images according to the input display data. The first output device also combines the multiple image planes to the composite output window and generates the output data representing the composite output window. The combined images are output according to the generated output data. The output device may be, for example, a projector.

In the first output device of the invention, the multiple image planes may include a picture image plane having the information volume per pixel set to a first information volume for drawing a color picture image, and a character image plane having the information volume per pixel set to a second information volume, which is lower than the first information volume, for drawing at least either of a character and a simple illustration, and the output data generation module may combine at least the picture image plane with the character image plane to the composite output window and generate the output data representing the composite output window. The arrangement of this embodiment uses the image plane for drawing color images and the image plane for drawing characters and simple illustrations to draw and edit the images and to output the drawn and edited images.

In the preferable embodiment of the first output device of the invention that uses the picture image plane and the character image plane, the display data generation module may lay the character image plane on the picture image plane to the composite display window and generate the display data representing the composite display window, and the output data generation module may lay the character image plane on the picture image plane to the composite output window and generate the output data representing the composite output window.

In another preferable embodiment of the first output device of the invention that uses the picture image plane and the character image plane, the multiple image planes may further include an operation image plane for drawing information on a device operation, the display data generation module may lay the operation image plane as an upper-most layer of the composite display window and generate the display data representing the composite display window, and the output data generation module may combine the image planes other than the operation image plane to the composite output window and generate the output data representing the composite output window. This arrangement enables the information on the device operation to be drawn on the operation image plane.

In the first output device of the invention, the drawing editing module may allocate plural drawing objects, such as picture images and characters, to the multiple image planes and generate a script file described in a language of selected format with regard to the allocation of the plural drawing objects, and the output data generation module may analyze the script file to generate the output data. The 'script file' may include object identification information for identifying each drawing object to be drawn on the image plane and layout information representing a layout of each drawing object on the image plane. The object identification information may be, for example, a storage location and a file name of each drawing object or may be a number or a symbol allocated to each drawing object.

Further, in the first output device of the invention, the display data generation module may convert pixel information on each pixel in each of the multiple image planes into corresponding pixel information of a maximum information volume per pixel adopted in at least one image plane among the multiple image planes having the different information volumes per pixel, and generate the display data representing the composite display window. Also, the output data generation module may convert pixel information on each pixel in each of the multiple image planes into corresponding pixel information of a maximum information volume per pixel adopted in at least one image plane among the multiple image planes having the different information volumes per pixel, and generate the output data representing the composite output window.

The present invention is also directed to a second printing device that prints picture images and characters on a printing medium, such as paper. The second printing device includes: an image plane information storage module that includes a graphical image plane region for storage of information regarding a graphical image plane usable to draw a color image thereon, and a print setting image plane region for storage of information regarding a print setting image plane usable to set a printing area and a non-printing area; a drawing editing module that draws the picture images and the characters on the graphical image plane accompanied with storage of data representing the picture images and the characters in the graphical image plane region included in the image plane information storage module, and edits the picture images and the characters drawn on the graphical image plane; a printing area specification module that sets a printing area on the print setting image plane accompanied with storage of data representing the set printing area in the print setting image plane region included in the image plane information storage module; a display data generation module that generates display data representing a display window, which enables a user to visually check contents drawn on the graphical image plane and the printing area set on the print setting image plane based on the information stored in the image plane information storage module; and a print data generation module that generates print data representing a print window having at least part of the contents, which are drawn on the graphical image plane based on the information stored in the image plane information storage module and are included in a specific area corresponding to the printing area set on the print setting image plane.

The second printing device of the invention draws picture images and characters and edits the drawn picture images and characters on the graphical image plane, which is used to draw a color image thereon, while setting a printing area on the print setting image plane, which is used to set a printing area and a non-printing area. The second printing device generates the display data representing the display window, which enables the user to visually check the contents drawn on the graphical image plane and the printing area set on the print setting image plane. The second printing device also generates the print data representing the print window having at least part of the contents, which are drawn on the graphical image plane and are included in a specific area corresponding to the printing area set on the print setting image plane. This arrangement enables the user to readily set a desired printing area while referring to the images drawn on the graphical image plane. This arrangement also ensures printing of only the desired images included in the set printing area. The printing device may be any of various printers, for example, an inkjet printer.

In the second printing device of the invention, the print setting image plane may be capable of setting each pixel as either a printing pixel or a non-printing pixel. In this embodiment, the print setting image plane may have an information volume per pixel set to 1 bit. Such a small memory capacity is used effectively to set the printing area.

In the preferable embodiment of the second printing device of the invention where the print setting image plane is capable of setting each pixel as a printing pixel or a non-printing pixel, the print data generation module may delete data of each specific pixel among all pixels in the graphical image plane, which corresponds to each non-printing pixel set on the print setting image plane, set the graphical image plane with data deletion to the print window, and generate the print data representing the set print window. In the second printing device of the embodiment, the print data generation module may combine the graphical image plane with the print setting image plane to keep or delete data of each pixel in the graphical image plane, set the combined image planes to the print window, and generate the print data representing the set print window.

In the second printing device of the invention, the display data generation module may combine a boundary of the printing area set on the print setting image plane with the graphical image plane, set the combined image plane with the boundary of the printing area to the display window, and generate the display data representing the set display window.

This arrangement enables the user to visually check the printing area out of the whole area of the graphical image plane. In the second printing device of the embodiment, the display data generation module may combine the boundary of the printing area set on the print setting image plane with the graphical image plane, control a non-printing area outside the boundary of the printing area to be unclear, set the combined image plane with the boundary of the printing area and the unclear non-printing area to the display window, and generate the display data representing the set display window. This arrangement enables the user to explicitly discriminate the printing area from the non-printing area.

In the second printing device of the invention, the graphical image plane may include multiple image planes having different information volumes per pixel, the graphical image plane region may include multiple image plane regions for storage of information regarding each of the multiple image planes, and the drawing editing module may draw selected part of the picture images and the characters on each of the multiple image planes accompanied with storage of data representing the selected part of the picture images and the characters in each corresponding image plane region, and edit the selected part of the picture images and the characters drawn on the image plane. The display data generation module may combine the multiple image planes to one composite image plane, set the composite image plane to the graphical image plane, and generate the display data based on the graphical image plane. The print data generation module may combine the multiple image planes to the composite image plane, set the composite image plane to the graphical image plane, and generate the print data based on the graphical image plane. In this embodiment, the picture images and the characters are drawn and edited on the multiple image planes having different information volumes per pixel. This arrangement desirably reduces the required memory capacity and shortens the time required for drawing and editing, compared with the prior art structure that uses multiple image planes having large information volumes per pixel to draw and edit images and characters. Images having large information volumes per pixel are drawn on the image plane having a large information volume per pixel, whereas images having small information volumes per pixel are drawn on the image plane having a small information volume per pixel. The second printing device combines the multiple image planes to the composite display window and generates the display data representing the composite display window. A display device inputs the display data and displays the combined images according to the input display data. The second printing device also combines the multiple image planes to the composite print window and generates the print data representing the composite print window. The combined images are printed according to the generated print data.

In the preferable embodiment of the second printing device of the invention where the graphical image plane includes the multiple image planes having different information volumes per pixel, the graphical image plane may include a picture image plane having the information volume per pixel set to a first information volume for drawing a color picture image, and a character image plane having the information volume per pixel set to a second information volume, which is lower than the first information volume, for drawing at least either of a character and a simple illustration. The arrangement of this embodiment uses the image plane for drawing color images and the image plane for drawing characters and simple illustrations to draw and edit the images and to print the drawn and edited images. In the second printing device of the embodiment, the display data generation module may lay the character image plane on the picture image plane to a composite image plane, set the composite image plane to the graphical image plane, and generate the display data based on the graphical image plane, and the print data generation module may lay the character image plane on the picture image plane to the composite image plane, set the composite image plane to the graphical image plane, and generate the print data based on the graphical image plane. In these cases, the first information volume may be 4 bytes, and the second information volume may be 1 byte.

In the structure of the second printing device of the invention where the graphical image plane includes the picture image plane and the character image plane, the drawing editing module, in response to an image drawing instruction, may set a movable outer frame for image layout on the character image plane and draw a picture image in a specific area on the picture image plane corresponding to the outer frame. This arrangement accelerates the image layout.

Further, in the structure of the second printing device of the invention where the graphical image plane includes the picture image plane and the character image plane, the drawing editing module, in response to an image layout change instruction, may display an outer frame for image layout at a specific position on the character image plane, which corresponds to contour of a picture image drawn on the picture image plane, change the displayed outer frame for image layout, and redraw the picture image in a specific area on the picture image plane corresponding to the changed outer frame. This arrangement accelerates the change of the image layout.

In the second printing device of the invention, the image plane information storage module may include an operation image plane region for storage of information regarding an operation image plane for drawing information on a device operation, and the display data generation module may combine the operation image plane with the display window, which enables the user to visually check the contents drawn on the graphical image plane and the printing area set on the print setting image plane based on the information stored in the image plane information storage module, to a combined display window and generate the display data representing the combined display window. This arrangement enables the information on the device operation to be drawn on the operation image plane. In this structure, the operation image plane may have an information volume per pixel set to 4 bits.

Further, in the second printing device of the invention, the drawing editing module may allocate at least one drawing object, such as a picture image or a character, to the graphical image plane and generate a script file described in a language of selected format with regard to the allocation of the at least one drawing object, and the print data generation module may analyze the script file to generate the print data. In the second printing device of the embodiment, the drawing editing module may describe the allocation of the at least one drawing object to the graphical image plane and generate the script file. In the preferable embodiment of the second printing device of the invention that generates the script file, the display data generation module may analyze the script file to generate the display data. The 'script file' may include object identification information for identifying each drawing object to be drawn on the image plane and layout information representing a layout of each drawing object on the image plane. The object identification information may be, for example, a storage location and a file name of each drawing object or may be a number or a symbol allocated to each drawing object.

The present invention is also directed to a second output device that outputs picture images and characters. The second output device includes: an image plane information storage module that includes a graphical image plane region for storage of information regarding a graphical image plane usable to draw a color image thereon, and an output setting image plane region for storage of information regarding an output setting image plane usable to set an output area and a non-output area; a drawing editing module that draws the picture images and the characters on the graphical image plane accompanied with storage of data representing the picture images and the characters in the graphical image plane region included in the image plane information storage module, and edits the picture images and the characters drawn on the graphical image plane; an output area specification module that sets an output area on the output setting image plane accompanied with storage of data representing the set output area in the output setting image plane region included in the image plane information storage module; a display data generation module that generates display data representing a display window, which enables a user to visually check contents drawn on the graphical image plane and the output area set on the output setting image plane based on the information stored in the image plane information storage module; and an output data generation module that generates output data representing an output window having at least part of the contents, which are drawn on the graphical image plane based on the information stored in the image plane information storage module and are included in a specific area corresponding to the output area set on the output setting image plane.

The second output device of the invention draws picture images and characters and edits the drawn picture images and characters on the graphical image plane, which is used to draw a color image thereon, while setting an output area on the output setting image plane, which is used to set an output area and a non-output area. The second output device generates the display data representing the display window, which enables the user to visually check the contents drawn on the graphical image plane and the output area set on the output setting image plane. The second output device also generates the output data representing the output window having at least part of the contents, which are drawn on the graphical image plane and are included in a specific area corresponding to the output area set on the output setting image plane. This arrangement enables the user to readily set a desired output area while referring to the images drawn on the graphical image plane. This arrangement also ensures output of only the desired images included in the set output area. The output device is, for example, a projector.

In the second output device of the invention, the output setting image plane may be capable of setting each pixel as either an output pixel or a non-output pixel. In this embodiment, the print setting image plane may have an information volume per pixel set to 1 bit. Such a small memory capacity is used effectively to set the printing area.

In the preferable embodiment of the second output device of the invention where the output setting image plane is capable of setting each pixel as an output pixel or a non-output pixel, the output data generation module may delete data of each specific pixel among all pixels in the graphical image plane, which corresponds to each non-output pixel set on the output setting image plane, set the graphical image plane with data deletion to the output window, and generate the output data representing the set output window. In the second output device of the embodiment, the output data generation module may combine the graphical image plane with the output setting image plane to keep or delete data of each pixel in the graphical image plane, set the combined image planes to the output window, and generate the output data representing the set output window.

In the second output device of the invention, the display data generation module may combine a boundary of the output area set on the output setting image plane with the graphical image plane, set the combined image plane with the boundary of the output area to the display window, and generate the display data representing the set display window. This arrangement enables the user to visually check the printing area out of the whole area of the graphical image plane.

Further, in the second output device of the invention, the graphical image plane may include multiple image planes having different information volumes per pixel, the graphical image plane region may include multiple image plane regions for storage of information regarding each of the multiple image planes, the drawing editing module may draw selected part of the picture images and the characters on each of the multiple image planes accompanied with storage of data representing the selected part of the picture images and the characters in each corresponding image plane region, and edits the selected part of the picture images and the characters drawn on the image plane. The display data generation module may combine the multiple image planes to one composite image plane, set the composite image plane to the graphical image plane, and generate the display data based on the graphical image plane. The output data generation module may combine the multiple image planes to the composite image plane, set the composite image plane to the graphical image plane, and generate the output data based on the graphical image plane. The second output device draws and edits picture images and characters on the multiple image planes having different information volumes per pixel. This arrangement desirably reduces the required memory capacity and shortens the time required for drawing and editing, compared with the prior art structure that uses multiple image planes having large information volumes per pixel to draw and edit images and characters. Images having large information volumes per pixel are drawn on the image plane having a large information volume per pixel, whereas images having small information volumes per pixel are drawn on the image plane having a small information volume per pixel. The second output device combines the multiple image planes to the composite display window and generates the display data representing the composite display window. A display device inputs the display data and displays the combined images according to the input display data. The second output device also combines the multiple image planes to the composite output window and generates the output data representing the composite output window. The combined images are output according to the generated output data.

In the second output device of the invention, the image plane information storage module may include an operation image plane region for storage of an operation image plane for drawing information on a device operation, and the display data generation module may combine the operation image plane with the display window, which enables the user to visually check the contents drawn on the graphical image plane and the printing area set on the print setting image plane based on the information stored in said image plane information storage module, to a combined display window and generate the display data representing the combined display window. This arrangement enables the information on the device operation to be drawn on the operation image plane. In this structure, the operation image plane may have an information volume per pixel set to 4 bits.

Further, in the second output device of the invention, the drawing editing module may allocate at least one drawing object, such as a picture image or a character, to the graphical image plane and generates a script file described in a language of selected format with regard to the allocation of the at least one drawing object, and the output data generation module may analyze the script file to generate the output data. The 'script file' may include object identification information for identifying each drawing object to be drawn on the image plane and layout information representing a layout of each drawing object on the image plane. The object identification information may be, for example, a storage location and a file name of each drawing object or may be a number or a symbol allocated to each drawing object.

The present invention is also directed to a first output method that outputs picture images and characters. The first output method including the steps of: (a) storing information, which regards multiple image planes having different information volumes per pixel, in memory regions allocated to the multiple image planes; (b) drawing selected part of the picture images and the characters on each of the multiple image planes accompanied with storage of data representing the selected part of the picture images and the characters in a corresponding memory region allocated to the image plane, and editing the selected part of the picture images and the characters drawn on the image plane; (c) combining the multiple image planes to one composite display window, based on the stored information, and generating display data representing the composite display window; and (d) combining at least two image planes out of the multiple image planes to one composite output window, based on the stored information, and generating output data representing the composite output window.

The first output method draws and edits picture images and characters on the multiple image planes having different information volumes per pixel. This arrangement desirably reduces the required memory capacity and shortens the time required for drawing and editing, compared with the prior art structure that uses multiple image planes having large information volumes per pixel to draw and edit images and characters. Images having large information volumes per pixel are drawn on the image plane having a large information volume per pixel, whereas images having small information volumes per pixel are drawn on the image plane having a small information volume per pixel. The first output method combines the multiple image planes to the composite display window and generates the display data representing the composite display window. A display device inputs the display data and displays the combined images according to the input display data. The first output method also combines the multiple image planes to the composite output window and generates the output data representing the composite output window. The combined images are output according to the generated output data. The output device may be a printing device, such as a printer, or an image output device, such as a projector. In the application of the printing device, the step (d) prints out the images on a medium, such as paper.

In the first output method of the invention, the multiple image planes may include a picture image plane having the information volume per pixel set to a first information volume for drawing a color picture image, and a character image plane having the information volume per pixel set to a second information volume, which is lower than the first information volume, for drawing at least either of a character and a simple illustration, and the step (d) may combine at least the picture image plane with the character image plane to the composite output window and generate the output data representing the composite output window. The arrangement of this embodiment uses the image plane for drawing color images and the image plane for drawing characters and simple illustrations to draw and edit the images and to output the drawn and edited images.

In the structure of the first output method of the invention that sets the picture image plane and the character image plane, the step (c) may lay the character image plane on the picture image plane to the composite display window and generate the display data representing the composite display window, and the step (d) may lay the character image plane on the picture image plane to the composite output window and generate the output data representing the composite output window.

In another structure of the first output method of the invention that sets the picture image plane and the character image plane, the multiple image planes may further include an operation image plane for drawing information on a device operation, the step (c) may lay the operation image plane as an upper-most layer of the composite display window and generate the display data representing the composite display window, and the step (d) may combine the image planes other than the operation image plane to the composite output window and generate the output data representing the composite output window. This arrangement enables the information on the device operation to be drawn on the operation image plane.

In the first output method of the invention, the step (b) may allocate plural drawing objects, such as picture images and characters, to the multiple image planes and generate a script file described in a language of selected format with regard to the allocation of the plural drawing objects, and the step (d) may analyze the script file to generate the output data. The ' script file' may include object identification information for identifying each drawing object to be drawn on the image plane and layout information representing a layout of each drawing object on the image plane. The object identification information may be, for example, a storage location and a file name of each drawing object or may be a number or a symbol allocated to each drawing object.

Further, in the first output method of the invention, the step (c) may convert pixel information on each pixel in each of the multiple image planes into corresponding pixel information of a maximum information volume per pixel adopted in at least one image plane among the multiple image planes having the different information volumes per pixel, and generate the display data representing the composite display window. Also, the step (d) may convert pixel information on each pixel in each of the multiple image planes into corresponding pixel information of a maximum information volume per pixel adopted in at least one image plane among the multiple image planes having the different information volumes per pixel, and generate the output data representing the composite output window.

The present invention is also directed to a second output method that outputs picture images and characters. The second output method including the steps of: (a) setting a graphical image plane region for storage of information regarding a graphical image plane usable to draw a color image thereon, and an output setting image plane region for storage of information regarding an output setting image plane usable to set an output area and a non-output area; (b) drawing the picture images and the characters on the graphical image plane accompanied with storage of data representing the picture images and the characters in the graphical image plane region, and editing the picture images and the characters drawn on the graphical image plane; (c) setting an output area on the output setting image plane accompanied with storage of data representing the set output area in the output setting image plane region; (d) generating display data representing a display window, which enables a user to visually check contents drawn on the graphical image plane and the output area set on the output setting image plane based on stored the information; and (e) generating output data representing an output window having at least part of the contents, which are drawn on the graphical image plane based on the stored information and are included in a specific area corresponding to the output area set on the output setting image plane.

The second output method of the invention draws picture images and characters and edits the drawn picture images and characters on the graphical image plane, which is used to draw a color image thereon, while setting an output area on the output setting image plane, which is used to set an output area and a non-output area. The second output method generates the display data representing the display window, which enables the user to visually check the contents drawn on the graphical image plane and the output area set on the output setting image plane. The second output method also generates the output data representing the output window having at least part of the contents, which are drawn on the graphical image plane and are included in a specific area corresponding to the output area set on the output setting image plane. This arrangement enables the user to readily set a desired output area while referring to the images drawn on the graphical image plane. This arrangement also ensures output of only the desired images included in the set output area. The output device may be a printing device, such as a printer, or an image output device, such as a projector. In the application of the printing device, the step (e) prints out the images on a medium, such as paper.

In the second output method of the invention, the output setting image plane may be capable of setting each pixel as either an output pixel or a non-output pixel, and the step (e) may delete data of each specific pixel among all pixels in the graphical image plane, which corresponds to each non-output pixel set on the output setting image plane, sets the graphical image plane with data deletion to the output window, and generates the output data representing the set output window. In the second output method of the embodiment, the step (e) may combine the graphical image plane with the output setting image plane to keep or delete data of each pixel in the graphical image plane, set the combined image planes to the output window, and generate the output data representing the set output window.

Further, in the second output method of the invention, the step (d) may combine a boundary of the output area set on the output setting image plane with the graphical image plane, set the combined image plane with the boundary of the output area to the display window, and generate the display data representing the set display window. This arrangement enables the user to visually check the output area out of the whole area of the graphical image plane.

Moreover, in the second output method of the invention, the graphical image plane may include multiple image planes having different information volumes per pixel, and the graphical image plane region may include multiple image plane regions for storage of information regarding each of the multiple image planes. The step (b) may draw selected part of the picture images and the characters on each of the multiple image planes accompanied with storage of data representing the selected part of the picture images and the characters in each corresponding image plane region, and edits the selected part of the picture images and the characters drawn on the image plane, the step (d) may combine the multiple image planes to one composite image plane, set the composite image plane to the graphical image plane, and generate the display data based on the graphical image plane, and the step (e) may combine the multiple image planes to the composite image plane, set the composite image plane to the graphical image plane, and generate the output data based on the graphical image plane. This arrangement desirably reduces the required memory capacity and shortens the time required for drawing and editing, compared with the prior art structure that uses multiple image planes having large information volumes per pixel to draw and edit images and characters. Images having large information volumes per pixel are drawn on the image plane having a large information volume per pixel, whereas images having small information volumes per pixel are drawn on the image plane having a small information volume per pixel. The second output method combines the multiple image planes to the composite display window and generates the display data representing the composite display window. A display device inputs the display data and displays the combined images according to the input display data. The second output method also combines the multiple image planes to the composite output window and generates the output data representing the composite output window. The combined images are output according to the generated output data.

Furthermore, in the second output method of the invention, the step (a) may set an operation image plane region for storage of an operation image plane for drawing information on a device operation, and the step (d) may combine the operation image plane with the display window, which enables the user to visually check the contents drawn on the graphical image plane and the output area set on the output setting image plane based on the stored information, to a combined display window and generate the display data representing the combined display window. This arrangement enables the information on the device operation to be drawn on the operation image plane. In this structure, the operation image plane may have an information volume per pixel set to 4 bits.

In the second output method of the invention, the step (b) may allocate at least one drawing object, such as a picture image or a character, to the graphical image plane and generate a script file described in a language of selected format with regard to the allocation of the at least one drawing object, and the step (e) may analyze the script file to generate the output data. The 'script file' may include object identification information for identifying each drawing object to be drawn on the image plane and layout information representing a layout of each drawing object on the image plane. The object identification information may be, for example, a storage location and a file name of each drawing object or may be a number or a symbol allocated to each drawing object.

The present invention is also directed to a first program that is applied to an output device equipped with a storage unit. The program includes: a module of storing information, which regards multiple image planes having different information volumes per pixel, in memory regions allocated to the multiple image planes in the storage unit; a module of drawing selected part of the picture images and the characters on each of the multiple image planes accompanied with storage of data representing the selected part of the picture images and the characters in a corresponding memory region allocated to the image plane, and editing the selected part of the picture images and the characters drawn on the image plane; a module of combining the multiple image planes to one composite display window, based on the stored information, and generating display data representing the composite display window; and a module of combining at least two image planes out of the multiple image planes to one composite output window, based on the stored information, and generating output data representing the composite output window.

The first program of the invention is installed in the output device equipped with the storage unit. The first program causes the output device to draw and edit picture images and characters on the multiple image planes having different information volumes per pixel. This arrangement desirably reduces the required memory capacity and shortens the time required for drawing and editing, compared with the prior art structure that uses multiple image planes having large information volumes per pixel to draw and edit images and characters. Images having large information volumes per pixel are drawn on the image plane having a large information volume per pixel, whereas images having small information volumes per pixel are drawn on the image plane having a small information volume per pixel. The first program causes the output device to combine the multiple image planes to the composite display window and to generate the display data representing the composite display window. A display device then inputs the generated display data and displays the combined images according to the input display data. The first program also causes the output device to combine the multiple image planes to the composite output window and to generate the output data representing the composite output window. The output device thus functions to output the combined images according to the generated output data. The output device may be a printing device, such as a printer, or an image output device, such as a projector.

In the second program of the invention, the second program includes: a module of setting a graphical image plane region for storage of information regarding a graphical image plane usable to draw a color image thereon, and an output setting image plane region for storage of information regarding an output setting image plane usable to set an output area and a non-output area in the storage unit; a module of drawing the picture images and the characters on the graphical image plane accompanied with storage of data representing the picture images and the characters in the graphical image plane region, and editing the picture images and the characters drawn on the graphical image plane; a module of setting an output area on the output setting image plane accompanied with storage of data representing the set output area in the output setting image plane region; a module of generating display data representing a display window, which enables a user to visually check contents drawn on the graphical image plane and the output area set on the output setting image plane based on stored the information; and a module of generating output data representing an output window having at least part of the contents, which are drawn on the graphical image plane based on the stored information and are included in a specific area corresponding to the output area set on the output setting image plane.

The second program of the invention is installed in the output device equipped with the storage unit. The second program causes the output device to draw picture images and characters and edit the drawn picture images and characters on the graphical image plane, which is used to draw a color image thereon, while setting an output area on the output setting image plane, which is used to set an output area and a non-output area. The second program causes the output device to generate the display data representing the display window, which enables the user to visually check the contents drawn on the graphical image plane and the output area set on the output setting image plane. The second program also causes the output device to generate the output data representing the output window having at least part of the contents, which are drawn on the graphical image plane and are included in a specific area corresponding to the output area set on the output setting image plane. This arrangement enables the user to readily set a desired output area while referring to the images drawn on the graphical image plane. This arrangement also ensures output of only the desired images included in the set output area. The output device may be a printing device, such as a printer, or an image output device, such as a projector.

The present invention is also directed to a script generation method for printing image data in a preset layout on a medium, such as paper. The script generation method includes the steps of : editing image data; displaying the edited image data; and generating a script that is structured to describe the displayed image data. The script is generated according to the preset layout for printing.

The script generation method of the invention generates the script, which is structured to describe the displayed image data, according to the preset layout for printing. Namely the resulting script is based on the preset layout for printing.

In the script generation method of the invention, subject image data of editing may have a lower resolution than a resolution of original image data. This arrangement accelerates generation of the script. In this embodiment, the script may describe a location of the original image data.

The present invention is also directed to a third output method that outputs image data in a preset layout on a medium, such as paper. The third output method including the steps of: receiving a script that is structured to describe image data displayed on a display window; analyzing the received script; generating output data, based on a result of the analysis; and outputting the generated output data.

The third output method of the invention receives a script that is structured to describe the image data displayed on the display window, analyzes the received script, generates the output data based on the result of the analysis, and outputs the generated output data. The images can thus be output on a medium, such as paper, based on the analysis of the script.

The present invention is also directed to a fourth output method that outputs image data in a preset layout on a medium, such as paper. The fourth output method including the steps of: receiving a script that is structured to describe image data; analyzing the script; retrieving a location of a target correction image to be corrected in the script; correcting the target correction image specified by the script; and
generating a composite output window, based on results of the analysis and correction, wherein the correction step corrects the target correction image after the retrieval of the location of the target correction image but before a start of generating the composite output window.

The fourth output method of the invention receives a script that is structured to describe the image data, analyzes the script, retrieves the location of a target correction image to be corrected in the script, corrects the target correction image specified by the script, and generates the composite output window based on the results of the analysis and correction. The target correction image is corrected after the retrieval of the location of the target correction image but before a start of generating the composite output window. The images obtained by analysis of the script are output after the required correction.

The present invention is also directed to an image data editing method that edits image data on a specific monitor. The image data editing method including the steps of: utilizing one input device to specify a working input device used for editing; sending editable image data to an output device; and editing the image data sent to and stored in the output device on a monitor of another input device, the image data editing method sending the editable image data to the output device without generating output data that does not require any further processing prior to output by the output device.

The image data editing method of the invention utilizes one input device to specify a working input device used for editing, sends editable image data to the output device, and edits the image data sent to and stored in the output device on a monitor of another input device. The image data editing method sends the editable image data to the output device without generating output data, which does not require any further processing prior to output by the output device.

### Brief Description of the Drawings

Fig. 1 schematically illustrates the configuration of a printer 20;
Fig. 2 shows allocation of image planes for display to the structure of a display image plane storage area 52;
Fig. 3 shows allocation of image planes for printing to the structure of a print image plane storage area 56;
Fig. 4 is a flowchart showing a series of image integration process;
Fig. 5 shows the image planes for display with setting of an image integration area;
Fig. 6 shows an image selection window;
Fig. 7 shows the image planes for display with an image A drawn thereon;
Fig. 8 is a flowchart showing a series of image area change process;
Fig. 9 shows a process of changing the image area of a selected image;
Fig. 10 shows the image planes for display with a changed image area;
Fig. 11 is a flowchart showing a series of character entry process;
Fig. 12 is a flowchart showing a series of script generation process;
Fig. 13 shows one example of a script;
Fig. 14 shows image planes 70 and 72 according to the script of Fig. 13;
Fig. 15 is a flowchart showing a series of script analysis process;
Fig. 16 shows a first half of a top page;
Fig. 17 shows a second half of the top page;
Fig. 18 shows a first image plane 80 displayed after script analysis and image drawing;
Fig. 19 schematically illustrates the configuration of another printer 120 in a second embodiment of the invention;
Fig. 20 shows allocation of image planes for display to the structure of a display image plane storage area 152;
Fig. 21 shows allocation of image planes for printing to the structure of a print image plane storage area 156;
Fig. 22 is a flowchart showing a series of image integration process;
Fig. 23 shows the image planes for display with setting of an image integration area;
Fig. 24 shows an image selection window;
Fig. 25 shows the image planes for display with an image A drawn thereon;
Fig. 26 is a flowchart showing a series of image area change process;
Fig. 27 shows a process of changing the image area of a selected image;
Fig. 28 shows the image planes for display with a changed image area;
Fig. 29 is a flowchart showing a series of character entry process;
Fig. 30 is a flowchart showing a series of printing image setting process;
Fig. 31 shows a printing image frame selection window;
Fig. 32 is a flowchart showing a series of script generation process;
Fig. 33 shows one example of a script;
Fig. 34 shows image planes 171 and 172 according to the script of Fig. 33; and
Fig. 35 is a flowchart showing a series of script analysis process.

### Best Modes of Carrying Out the Invention

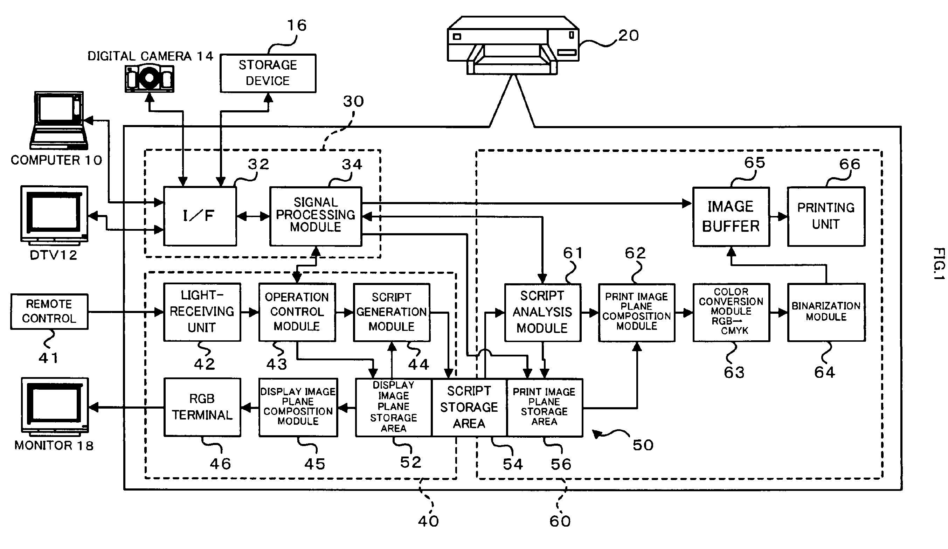

Some modes of carrying out the invention are described below as preferred embodiments. Fig. 1 schematically illustrates the configuration of an inkjet printer 20 in a first embodiment of the invention. In the printer 20 of the first embodiment, an input module 30 is connected to a computer 10, a digital TV receiver 12, a digital camera 14, and a storage device 16 of memory card or another storage medium and inputs digital images (hereafter simply referred to as images) from such connected devices. The printer 20 also includes a print editing module 40 that displays the input images from the input module 30 on a monitor 18 and edits and lays out object images to be printed in response to the user's operations of a remote control terminal 41 (hereafter referred to as the remote control), and a print execution module 60 that prints the input images from the input module 30 and the object images edited and laid out by the print editing module 40. A memory 50 of the printer 20 is included in both the print editing module 40 and the print execution module 60 and has a display image plane storage area 52, a script storage area 54, and a print image plane storage area 56. The monitor 18 may be a standard display or a general TV receiver with video input terminals.

The input module 30 includes an input interface 32 that receives input signals of the images from the computer 10, the digital TV receiver 12, the digital camera 14, and the storage device 16, and a signal processing module 34 that allocates data to one of multiple output destinations corresponding to the format of each input signal received by the input interface 32. When the input signal represents print data immediately printable without any processing, the output destination specified by the signal processing module 34 is an image buffer 65 of the print execution module 60. When the input signal represents RGB image data, the specified output destination is the print image plane storage area 56 of the memory 50. When the input image represents a file described in a selected markup language (for example, XHTML language), the specified output destination is a script analysis module 61 of the print execution module 60. The image buffer 65 and the script analysis module 61 will be described in detail later.

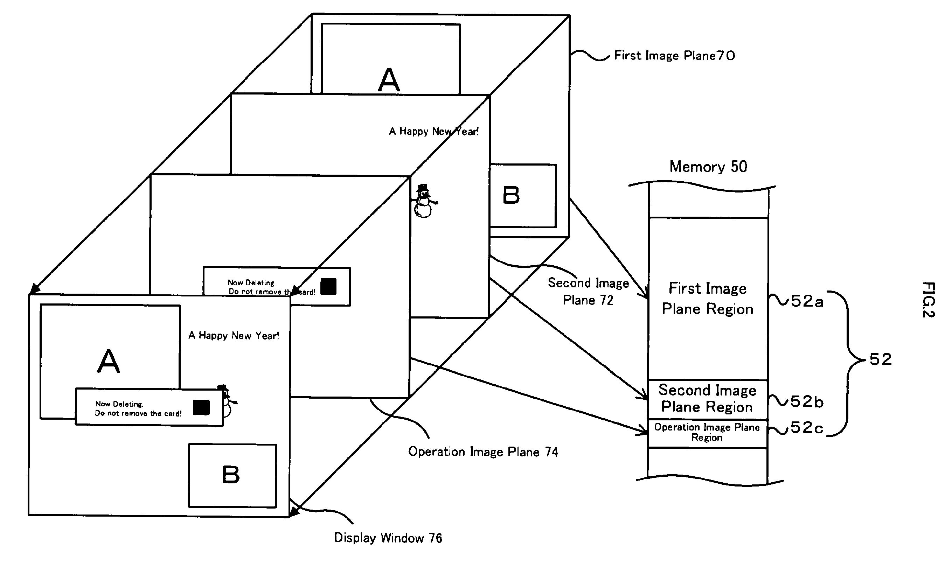

The print editing module 40 includes a light-receiving unit 42 that receives signals from the remote control 41, and an operation control module 43 that utilizes the display image plane storage area 52 of the memory 50 to draw images and characters on two image planes having different information volumes per pixel and to change the layout of the images and the characters, in response to the user's operations of the remote control 41. The print editing module 40 also has a script generation module 44 that generates a script describing the contents drawn on the two image planes in a selected description language and stores the generated script into the script storage area 54 of the memory 50, and a display image plane composition module 45 that combines these two image planes with an image plane for operations and outputs a composite image plane to an RGB terminal 46 linked to the monitor 18. Fig. 2 shows allocation of these image planes for display to the structure of the display image plane storage area 52 of the memory 50. In the first embodiment, as shown in Fig. 2, the display image plane composition module 45 combines a first image plane 70 and a second image plane 72 as the two image planes having different information volumes per pixel with an operation image plane 74 as the image plane for operations and outputs a composite image plane as a display window 76 to be displayed on the monitor 18. In the first embodiment, the first image plane 70 has the information volume per pixel set to 4 bytes to enable full color display, whereas the second image plane 72 has the information volume per pixel set to 1 byte to enable 256 color display. The operation image plane 74 has the information volume per pixel set to 4 bits to ensure transmission of information on editing operations. The first image plane 70, the second image plane 72, and the operation image plane 74 are respectively allocated to a first image plane region 52a, a second image plane region 52b, and an operation image plane region 52c in the display image plane storage area 52 of the memory 50. The operation control module 43 draws full color images on the first image plane 70, while drawing 256-color images and characters on the second image plane 72. The first image plane 70 and the second image plane 72 are designed to have whole display areas equivalent to printable areas, regardless of the size of printing paper. The functions of the operation control module 43 to draw images and characters and the functions of the script generation module 44 to generate a script will be described in detail later.

The display image plane composition module 45 combines the first image plane 70 and the second image plane 72 with the operation image plane 74 and outputs the composite image plane as the display window 76 to the RGB terminal 46, as described above. In the structure of the first embodiment, the information volume per pixel is respectively set to 4 bytes for the first image plane 70, to 1 byte for the second image plane 72, and to 4 bits for the operation image plane 74. The display image plane composition module 45 accordingly converts the information volumes per pixel set for the second image plane 72 and the operation image plane 74 into 4 bytes, which is equal to the information volume set for the first image plane 70, prior to the composition. In the structure of the first embodiment, the display image plane composition module 45 is constructed as a hardware element (video chip) for the high-speed conversion and composition.

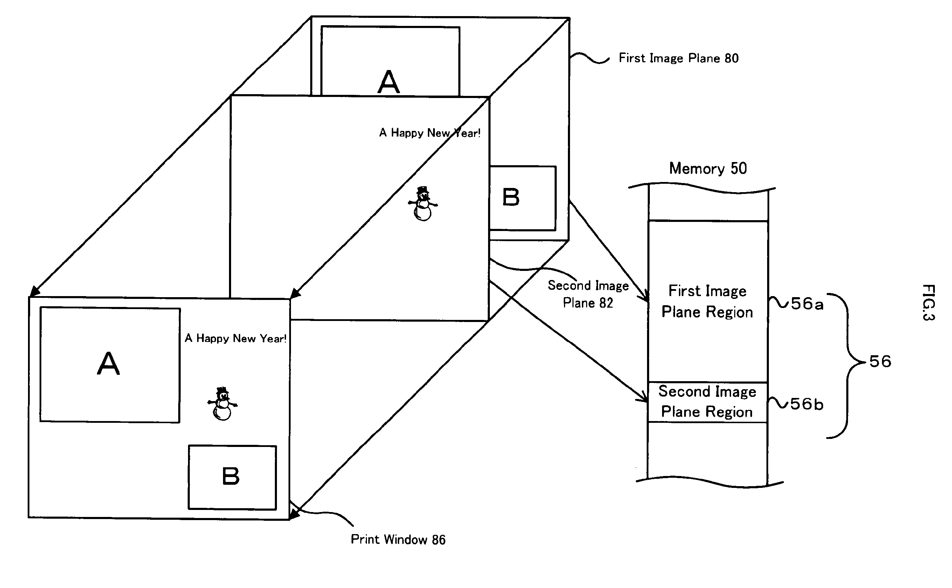

In the print execution module 60, the script analysis module 61 reads and analyzes the script stored in the script storage area 54 or the file described in the selected markup language and output from the signal processing module 34, and utilizes the print image plane storage area 56 of the memory 50 to draw object images to be printed on two image planes having different information volumes per pixel. The print execution module 60 also includes a print image plane composition module 62 that combines the object images drawn on the two image planes and generates a composite print window expressed as RGB data, and a color conversion module 63 that converts the RGB data of the print window into CMYK data. The print execution module 60 further has a binarization module 64 that makes the color-converted CMYK data subject to a preset series of image processing, for example, an error diffusion process, for binarization, and an image buffer 65 that temporarily accumulates the binarized CMYK data to be output in band units to a printing unit 66 with a print head (not shown). Fig. 3 shows allocation of these image planes for printing to the structure of the print image plane storage area 56 of the memory 50. In the first embodiment, as shown in Fig. 3, the print image plane composition module 62 combines a first image plane 80 and a second image plane 82 as the two image planes having different information volumes per pixel to a composite image plane as a print window 86. In the first embodiment, the first image plane 80 has the information volume per pixel set to 4 bytes to enable full color display, whereas the second image plane 82 has the information volume per pixel set to 1 byte to enable 256 color display. These settings correspond to those of the first image plane 70 and the second image plane 72 for display. The first image plane 80 and the second image plane 82 are respectively allocated to a first image plane region 56a and a second image plane region 56b in the print image plane storage area 56 of the memory 50. The script analysis module 61 draws full color images on the first image plane 80, while drawing 256-color images and characters on the second image plane 82 according to the analyzed script. The sizes of the first image plane 80 and the second image plane 82 are set according to the size of the printing paper. The functions of the script analysis module 61 to analyze a script and to draw images and characters will be described in detail later.

The print image plane composition module 62 combines the first image plane 80 with the second image plane 82 to the composite image plane and outputs the composite image plane as the print window 86 to the color conversion module 63, as described above. In the structure of the first embodiment, the information volume per pixel is respectively set to 4 bytes for the first image plane 80 and to 1 byte for the second image plane 82. The print image plane composition module 62 accordingly converts the information volume per pixel set for the second image plane 82 into 4 bytes, which is equal to the information volume set for the first image plane 80, prior to the composition. In the structure of the first embodiment, the print image plane composition module 62 and the color conversion module 63 are integrated as a one-chip hardware element for the high-speed conversion, composition, and color conversion. The color conversion module 63 and the binarization module 64 have the similar functions to those of a conventional printer driver activated to send print data to a general inkjet printer. The image buffer 65 and the printing unit 66 are typically included in the general inkjet printer. The functions and the operations of these elements are not characteristic of the invention and are thus not described here in detail.

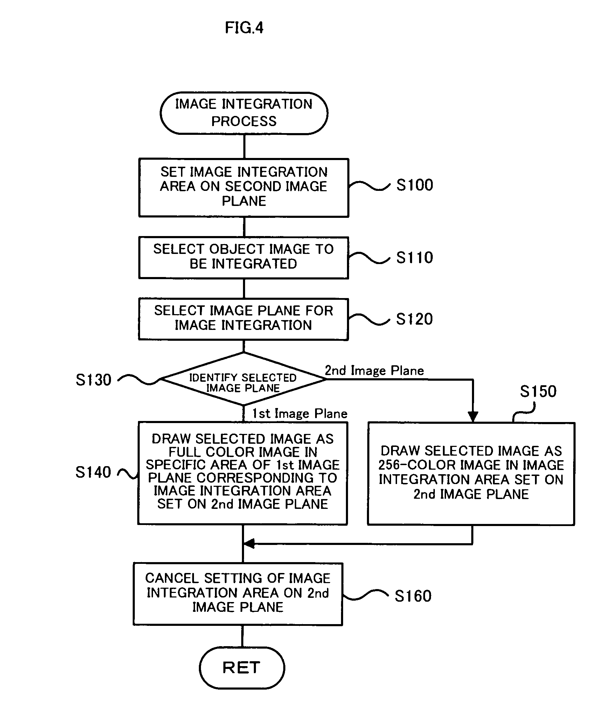

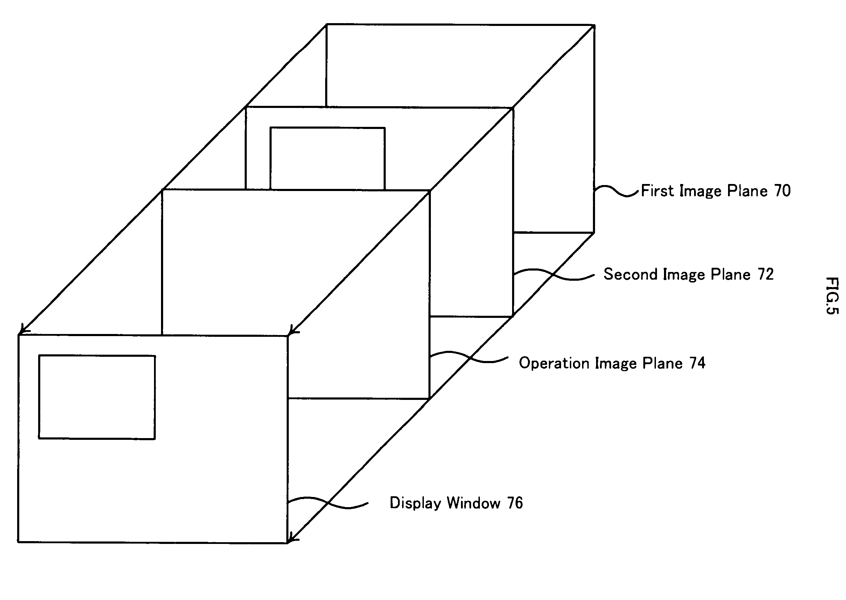

The printer 20 of the first embodiment configured as discussed above have various operations as described below. The description regards first series of operations executed by the print editing module 40 and then series of operations executed by the print execution module 60. Fig. 4 is a flowchart showing a series of image integration process executed to integrate images and generate a print window. The image integration process first sets an image integration area for integration of images on the second image plane 72, in response to the user's key operations of the remote control 41 (step S100). For example, the user may shift a pointer displayed on the monitor 18 and manipulated with the remote control 41 to specify an upper left point and a lower right point defining a rectangular frame as a desired image integration area. Fig. 5 shows the image planes for display with setting of an image integration area. As illustrated, the image integration area set as a rectangular frame on the second image plane 72 is shown in the display window 76 on the monitor 18. The image integration area is set on the second image plane 72, since the drawing speed on the second image plane 72 is higher than the drawing speed on the first image plane 70.

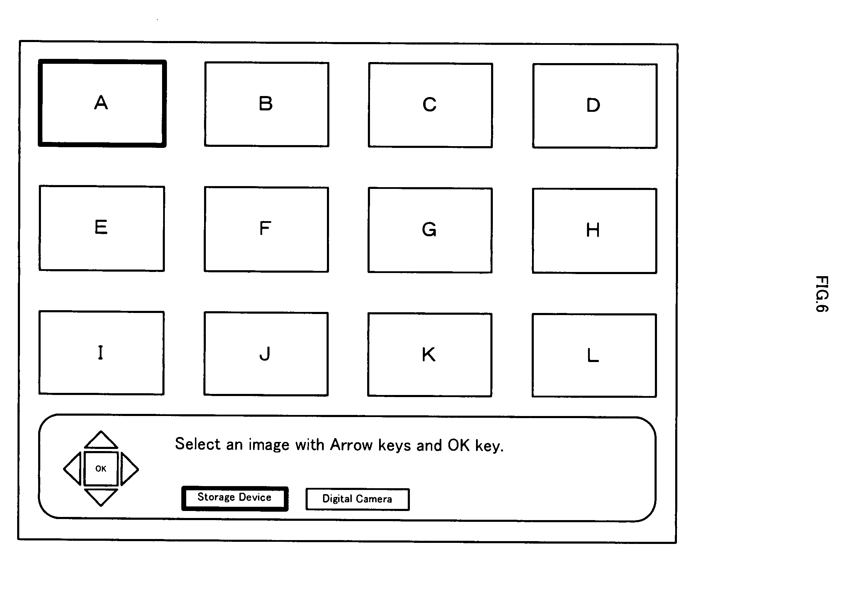

The image integration process then selects an object image to be integrated (step S110). In response to the user's operation of the remote control 41 to specify an image storage source, thumbnail images stored in the specified image storage source are displayed on the monitor 18. The user selects a desired thumbnail image as the object image to be integrated, among the displayed thumbnail images. Fig. 6 shows an image selection window. In this illustrated example, the storage device 16 is specified as the image storage source. The user selects a desired thumbnail image with arrow keys and an OK key. The image integration process subsequently selects an image plane for integration of the selected object image between the first image plane 70 and the second image plane 72 (step S120) . For example, the user operates an image selection button (not shown) on the remote control 41 to select the image plane for image integration. The user selects the first image plane 70 for integration of a full color photographic image or another full color image, while selecting the second image plane 72 for integration of a 256-color illustration or another 256-color image.

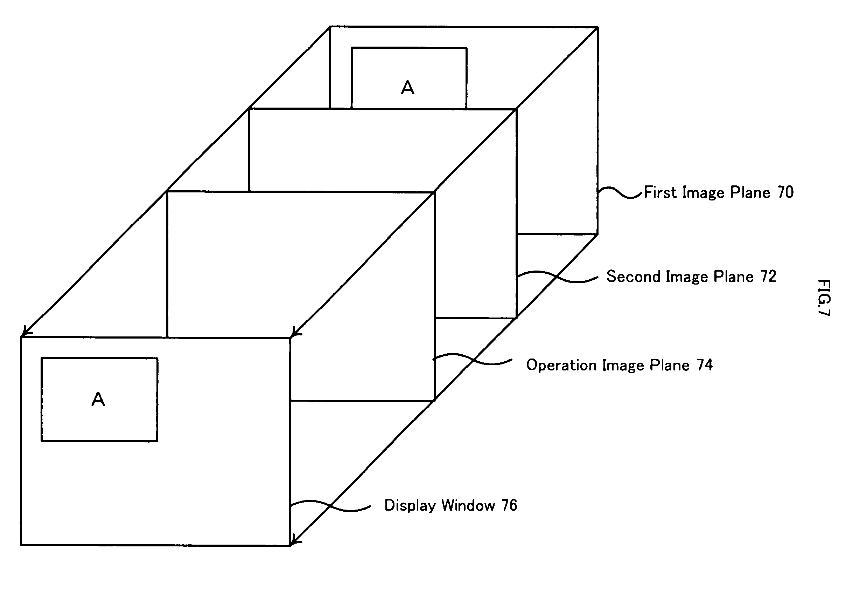

When the selected image plane for image integration is identified as the first image plane 70 (step S130), the selected image is drawn as a full color image in a specific area of the first image plane 70 corresponding to the image integration area set on the second image plane 72 (step S140). When the selected image plane for image integration is identified as the second image plane 72 (step S130), on the other hand, the selected image is drawn as a 256-color image in the image integration area set on the second image plane 72 (step S150). After drawing at step S140 or at step S150, the image integration process cancels the setting of the image integration area on the second image plane 72 (step S160) and is terminated. In the illustrated example of Fig. 7, the image integration area of Fig. 5 is set on the second image plane 72, and an image A (see Fig. 6) and the first image plane 70 are selected for image integration. In the state of Fig. 7, the setting of the image integration area is cancelled on the second image plane 72. The selected image A is drawn in the specific area of the first image plane 70 corresponding to the image integration area set on the second image plane 72 and is shown in the display window 76 on the monitor 18.

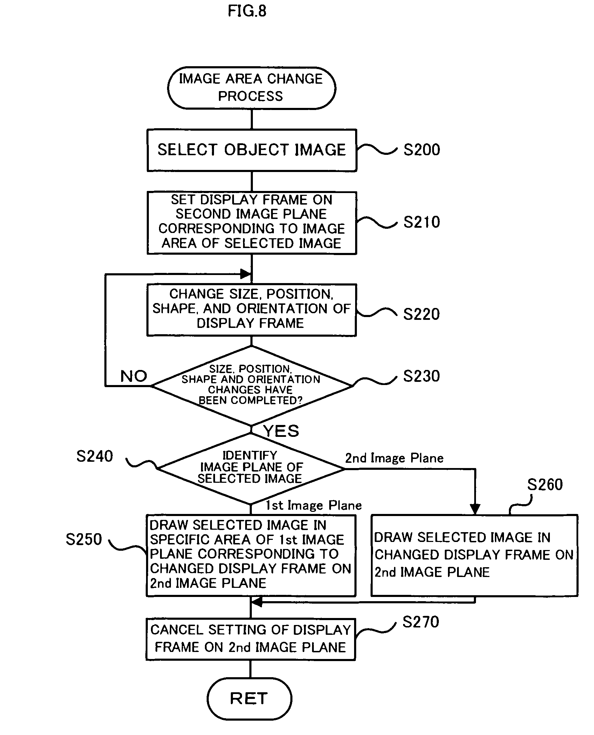

Fig. 8 is a flowchart showing a series of image area change process executed to change the size, the position, the shape, and the orientation of the integrated image. The image area change process first selects an object integrated image for a change of its image area, in response to the user's key operation of the remote control 41 (step S200). For example, the user may shift the pointer displayed on the monitor 18 and manipulated with the remote control 41 to select a desired image.

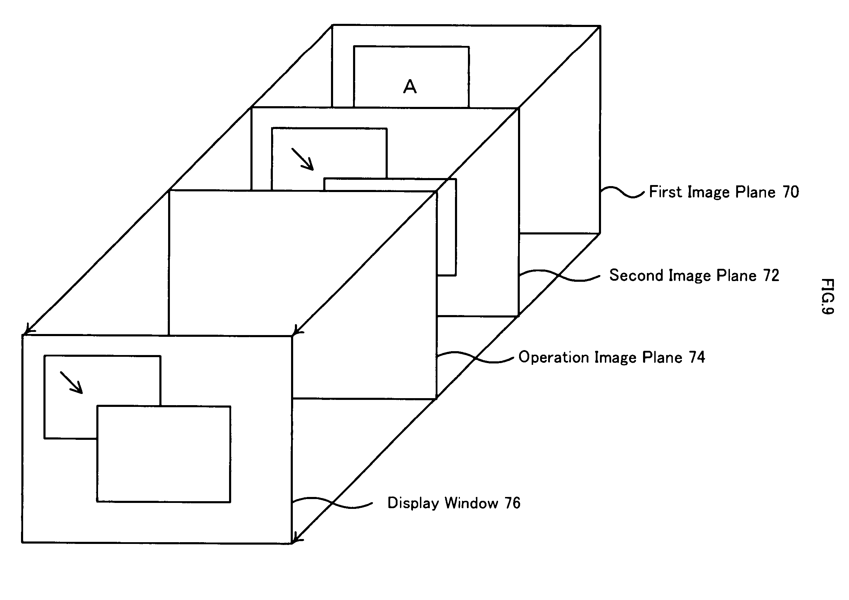

Whether the selected image is drawn on the first image plane 70 or on the second image plane 72, the image area change process sets a display frame in a specific position of the second image plane 72 corresponding to the contour of the image area of the selected image (step S210). The display frame set on the second image plane 72 is shifted, rotated, or changed in size or in shape, in response to the user's operations of the remote control 41 (step S220). For example, the user may hold and drag the whole rectangular display frame with the pointer displayed on the monitor 18 and manipulated with the remote control 41 to shift the position of the display frame. The user may hold and drag one of the four corners of the rectangular display frame along a diagonal line to change the size of the display frame in the diagonal direction. The user may hold and drag one of the four sides of the rectangular display frame to change the rectangular shape of the display frame. The user may operate a rotation button (not shown) on the remote control 41 to rotate the display frame. During the size, position, shape, and orientation changes of the display frame, the selected image is kept in the previous state prior to the start of the image area change process. Fig. 9 shows a process of changing the image area of a selected image A drawn on the first image plane 70. As illustrated, the display frame set in the specific position of the second image plane 72 corresponding to the contour of the image area of the selected image A drawn on the first image plane 70 may be shifted, rotated, or changed in size or in shape. Any of such size, position, shape, and orientation changes of the display frame is shown in the display window 76 on the monitor 18. Even when the selected image is drawn on the first image plane 70, the display frame is set on the second image plane 72 for any of the size, position, shape, and orientation changes. This is because the processing speed on the second image plane 72 is higher than the processing speed on the first image plane 70.

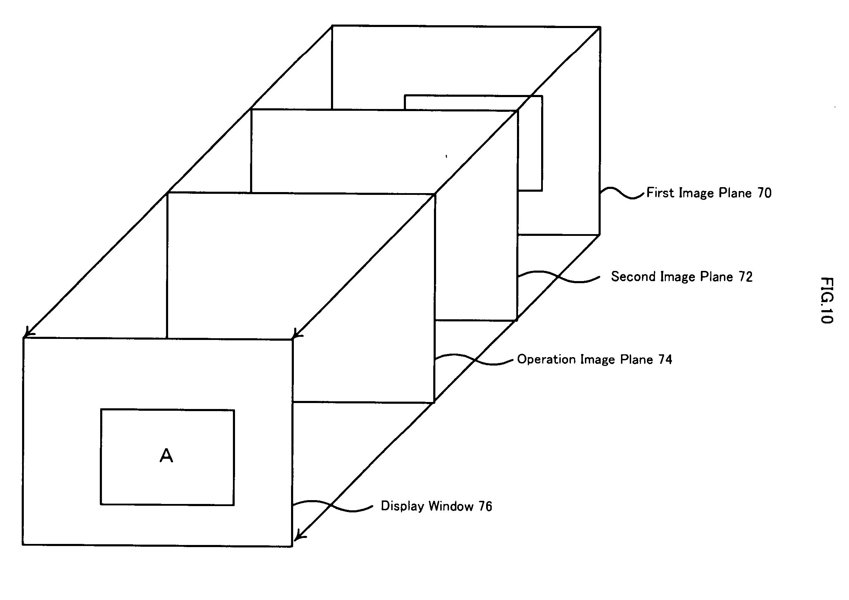

On completion of the size, position, shape, and orientation changes of the display frame, for example, in response to the user's operation of an OK button (not shown) on the remote control 41 (step S230), the image plane of the selected image is identified (step S240). When the identified image plane is the first image plane 70 (step S240), the selected image is drawn in a specific area of the first image plane 70 corresponding to the changed display frame on the second image plane 72 (step S250). When the identified image plane is the second image plane 72 (step S240), on the other hand, the selected image is drawn in the changed display frame on the second image plane 72 (step S260). The image area change process then cancels the setting of the display frame on the second image plane 72 (step S270) and is terminated. In the illustrated example of Fig. 10, on completion of the size, position, shape, and orientation changes of the display frame of Fig. 9, the display frame set on the second image plane 72 is cancelled. The selected image A is drawn in the specific area of the first image plane 70 corresponding to the changed display frame on the second image plane 72 and is shown in the display window 76 on the monitor 18.

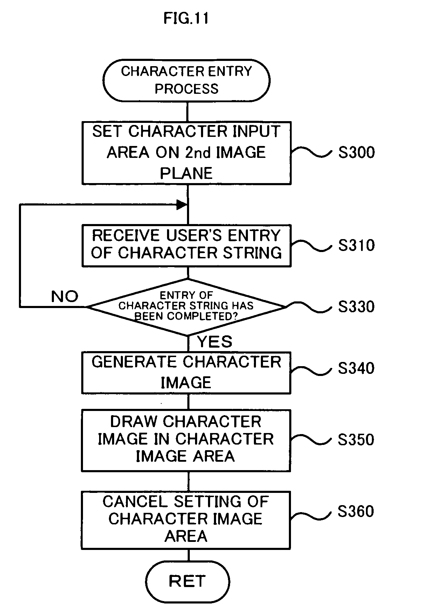

Fig. 11 is a flowchart showing a series of character entry process executed to enter characters on the second image plane 72. The character entry process first sets a character input area for entry of a character string on the second image plane 72, in response to the user's key operations of the remote control 41 (step S300). For example, in the same manner as step S100 in the image integration process of Fig. 4, the user may shift a pointer displayed on the monitor 18 and manipulated with the remote control 41 to specify an upper left point and a lower right point defining a rectangular frame as a desired character input area. The character entry process then receives the user's entry of a character string by the operations of the remote control 41 (step S310). For example, the user may enter a character string by operations of a software keyboard displayed on the monitor 18 with a pointer manipulated with the remote control 41. In another example, the user may operate ten keys on the remote control 41 to enter a character string. The user may operate the remote control 41 to specify the character font and color in this character entry process.

On completion of the user' s entry of the character string, for example, in response to the user's operation of an OK button (not shown) on the remote control 41 (step S330), the character entry process creates a file for specifying the entered character string as a character image (step S340). The size of the character image is set to ensure sufficiently clear printing of the character font even when the character input area is doubled. The character image has 1 bit set to the information volume per pixel. The file has a header for storage of information on the specified character font and color. Namely the character image of the first embodiment is generated as a bitmap image of monochromatic characters having the double or triple size of the character input area. The character image is displayed in the specified character color, based on the color information of the header. The generated character image is integrated in the character input area (step S350) in a similar manner to integration of the selected image in the image integration area in the image integration process of Fig. 4. The character entry process then cancels the setting of the character input area on the second image plane 72 (step S360) and is terminated. The image area change process of Fig. 8 may be executed to change the size, the position, the shape, and the orientation of a display frame for the character image representing the entered character string. The generated character image is stored as a character image file in the user' s selected device, for example, in a selected folder in the storage device 16.

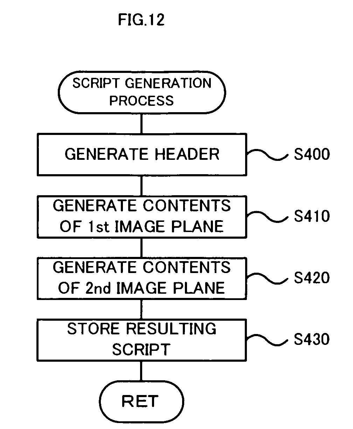

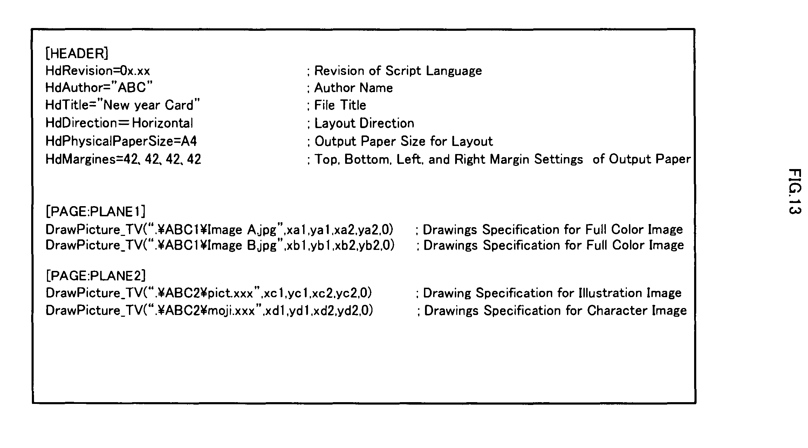

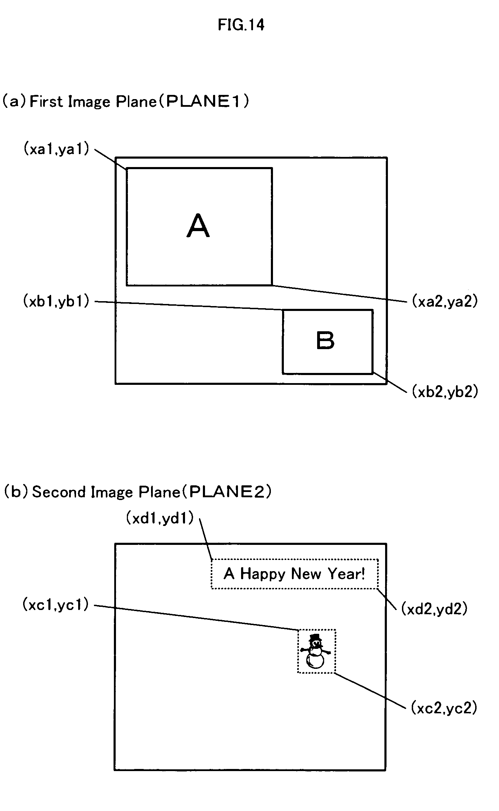

The contents of a resulting print window with image integration and character entry are described in a script. Fig. 12 is a flowchart showing a series of script generation process. Fig. 13 shows one example of a script thus generated. Fig. 14 shows the first image plane 70 and the second image plane 72 according to the script of Fig. 13. The script generation process of Fig. 12 executed by the script generation module 44 sequentially generates a header (step S400), the contents of the first image plane 70 (step S410), and the contents of the second image plane 72 (step S420) as a script, and stores the generated script in the script storage area 54 of the memory 50 (step S430). In the script of Fig. 13 described in the selected script language of the first embodiment, the header includes an identifier 'HEADER', the revision of the script language, the author name, the file title, the layout direction, the output paper size for the layout, and the top, bottom, left, and right margin settings of the output paper in this sequence. The contents of the first image plane 70 are described after an identifier 'PAGE: PLANE 1' and include drawing specification of an image A and drawing specification of an image B in this sequence. A description 'DrawPicture_TV' for drawing specification of each image includes variables specifying the name and the pass of the image file, the x coordinate at the upper left corner of the image area, the y coordinate at the upper left corner of the image area, the x coordinate at the lower right corner of the image area, the y coordinate at the lower right corner of the image area, and rotation of the image. In the structure of the first embodiment, the variable specifying rotation of the image is set to '0' for no rotation, to '1' for a clockwise rotation of 90 degrees, to '2' for a clockwise rotation of 180 degrees, to '3' for a clockwise rotation of 270 degrees, and to '4' for an auto rotation. The contents of the second image plane 72 are described after an identifier 'PAGE: PLANE 2' and include drawing specification for an illustration image, and drawing specification for a character image in this sequence.

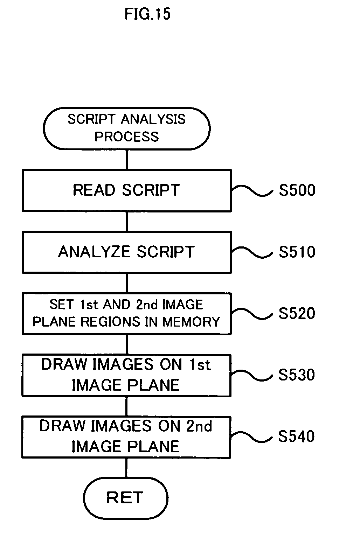

The script generated and stored in the script storage area 54 of the memory 50 is read and analyzed by the script analysis module 61, in response to the user's operation of a print button (not shown) on the remote control 41. The analyzed script is drawn as the first image plane 80 and the second image plane 82 for printing in the print image plane storage area 56 of the memory 50. Fig. 15 is a flowchart showing a series of script analysis process. The script analysis process first reads a script from the script storage area 54 of the memory 50 (step S500), analyzes the header in the script (step S510), and sets the first image plane 80 and the second image plane 82, that is, the first image plane region 56a and the second image plane region 56b of the print image plane storage area 56, based on the information on the output paper size stored in the analyzed header (step S520). The script analysis process then draws images on the first image plane 80 based on the description of the script after the identifier 'PAGE: PLANE 1' (step S530), and draws images on the second image plane 82 based on the description of the script after the identifier 'PAGE: PLANE 2' (step S540). The concrete procedure reads each specified image file from a specified pass in the script and draws the image of the specified image file in a specified orientation in a specified image area.

The first image plane 80 and the second image plane 82 with the images drawn corresponding to the first image plane region 56a and the second image plane region 56b of the print image plane storage area 56 are combined to a composite image plane by the print image plane composition module 62 as described above. The composite image plane is converted into CMYK data by the color conversion module 63, is binarized with regard to each of the colors C, M, Y, and K by the binarization module 64, is temporarily stored in the image buffer 65, and is output to the output paper by the printing unit 66.

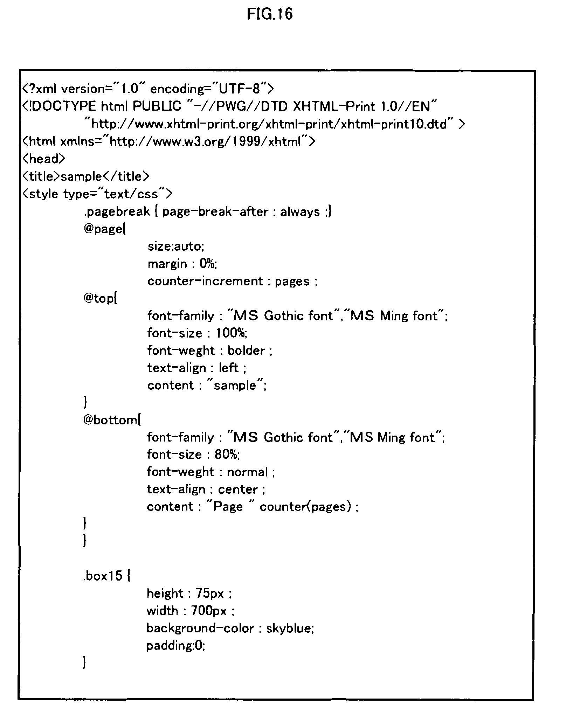

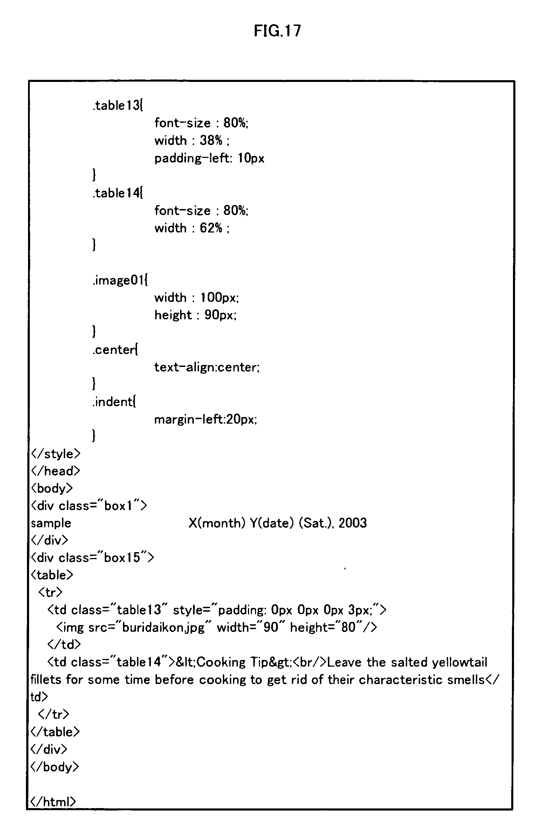

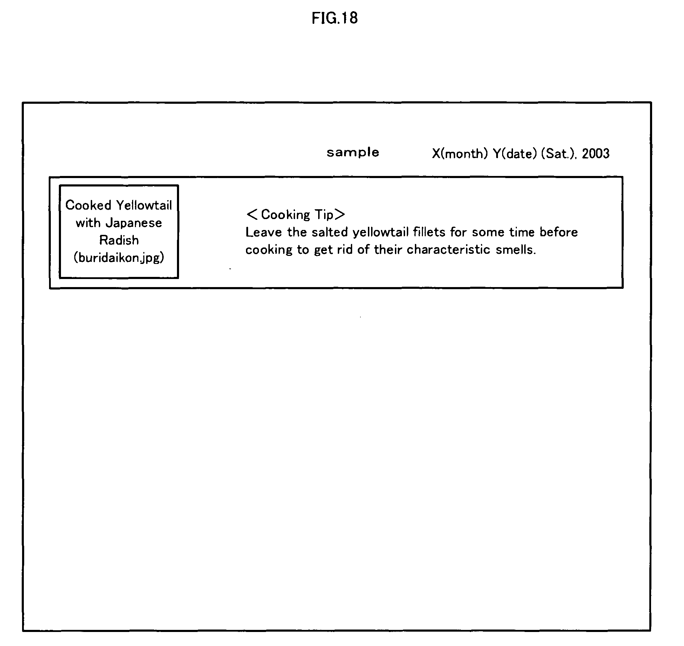

In the structure of the first embodiment, the script analysis module 61 analyzes the script described in the script language, sets the first image plane region 56a and the second image plane region 56b in the print image plane storage area 56, and draws the images in the first image plane 80 and in the second image plane 82. The script analysis module 61 may also analyze a top page described in a markup language, set the first image plane region 56a in the print image plane storage area 56, and draw the images in the first image plane 80. In this case, no images are drawn in the second image plane 82. After the images are drawn in the first image plane 80 based on the top page described in the markup language, the print image plane composition module 62 combines the first image plane 80 including the drawn images with the second image plane 82 including no drawn images to a composite image plane and transfers the composite image plane to the color conversion module 63. The processing of and after the color conversion module 63 to print the images based on the top page described in the markup language is identical with that to print the images based on the script described in the script language. Figs. 16 and 17 show one example of a top page described in the XHTML language as the markup language. Fig. 18 shows a resulting image drawn in the first image plane 80.

As described above, the printer 20 of the first embodiment uses the first image plane 70 and the second image plane 72 having different information volumes per pixel to integrate images and enter characters for editing a print window. This arrangement desirably reduces the required memory capacity and shortens the required time for drawing and editing, compared with the conventional structure that uses multiple image planes having large information volumes per pixel to draw and edit images and characters. The second image plane 72 having the less information volume per pixel is used to set the image integration area required for integration of images and to set the display frame required for editing. This ensures prompt editing. The information required for device operations is displayed on the operation image plane 74. The first image plane 70, the second image plane 72, and the operation image plane 74 are combined to a composite image plane, which is displayed as the display window 76 on the monitor 18. The editing results on the respective image planes are described as a script. The print execution process analyzes the script and integrates the images on the image planes. This arrangement effectively avoids potential troubles, such as the lowered picture quality of images by editing. Description of the editing results on the image planes as a script is suitable for transmission of the editing results in the form of a file and for interruption of editing. In the case of entry of characters, a character image representing the entered character string is generated and is processed in the same manner as the general picture images. Namely the character images and the picture images are treated in a similar manner. The printer 20 may be connected directly to the computer 10, the digital TV receiver 12, the digital camera 14, and the storage device 16 to input, edit, and print images.

The memory 50 including the display image plane storage area 52, the script storage area 54, and the print image plane storage area 56 in the printer 20 of the first embodiment corresponds to the image plane information storage module in the first printing device of the invention. The operation control module 43 executing the image integration process of Fig. 4, the image area change process of Fig. 8, and the character entry process of Fig. 11 and the script generation module 44 executing the script generation process of Fig. 12 are equivalent to the drawing editing module in the first printing device of the invention. The display image plane composition module 45 corresponds to the display data generation module in the first printing device of the invention. The script analysis module 61 executing the script analysis process of Fig. 15 and the print image plane composition module 62 are equivalent to the print data generation module in the first printing device of the invention.

The printer 20 of the first embodiment uses the first image plane 70 having the 4-byte information volume per pixel and the second image plane 72 having the 1-byte information volume per pixel as the two image planes having different information volumes per pixel. The information volumes per pixel of the first image plane 70 and the second image plane 72 are, however, not restricted to these values but may be set arbitrarily.

The printer 20 of the first embodiment uses the two image planes having different information volumes per pixel (the first image plane 70 and the second image plane 72) to draw and edit images. Three or more image planes having different information volumes per pixel may be used to draw and edit images.

The printer 20 of the first embodiment uses the first image plane 70 and the second image plane 72 having different information volumes per pixel to draw and edit images. Superposition of the operation image plane 74 for device operations upon a composite image plane of the first image plane 70 and the second image plane 72 gives a final composite image plane, which is displayed as the display window 76 on the monitor 18. One possible modification may omit the operation image plane 74 and use the second image plane 72 for device operations.

The printer 20 of the first embodiment generates a bitmap character image corresponding to an entered character string by taking into account the size of the character input area. The generated bitmap character image is subjected to the subsequent series of image processing in the same manner as the general picture images. Each character in the entered character string may otherwise be processed as character data.

The printer 20 of the first embodiment uses the script language shown in Fig. 13 to describe the contents of the first image plane 70 and the second image plane 72 as a script. Any script language may be adopted for such description. For example, in the first embodiment, the description 'DrawPicture_TV' for drawing specification of each image includes variables specifying the name of the image file, the x coordinate at the upper left corner of the image area, the y coordinate at the upper left corner of the image area, the x coordinate at the lower right corner of the image area, the y coordinate at the lower right corner of the image area, and the rotation of the image. In one possible modification, the name of the image file in the description may be replaced by an object number, and a list of the object number mapped to the name of each image file may be described separately.

The printer 20 of the first embodiment uses the script language to describe the contents of the first image plane 70 and the second image plane 72 as a script. A markup language, such as the XHTML language, may be used to describe the contents of the first image plane 70 and the second image plane 72.

In the printer 20 of the first embodiment, the operation control module 43 uses the display image plane storage area 52 of the memory 50 to draw images on the first image plane 70 and the second image plane 72. The script generation module 44 describes the contents of the first image plane 70 and the second image plane 72 as a script and stores the script in the script storage area 54. In the printing process, the script analysis module 61 analyzes the script stored in the script storage area 54 and uses the print image plane storage area 56 to draw images on the first image plane 80 and the second image plane 82. The first image plane 80 and the second image plane 82 are combined to a composite image plane as the print window 86 for printing. The operation control module 43 may use the print image plane storage area 56 of the memory 50 to draw images on the first image plane 80 and the second image plane 82, instead of using the display image plane storage area 52 to draw images on the first image plane 70 and the second image plane 72.

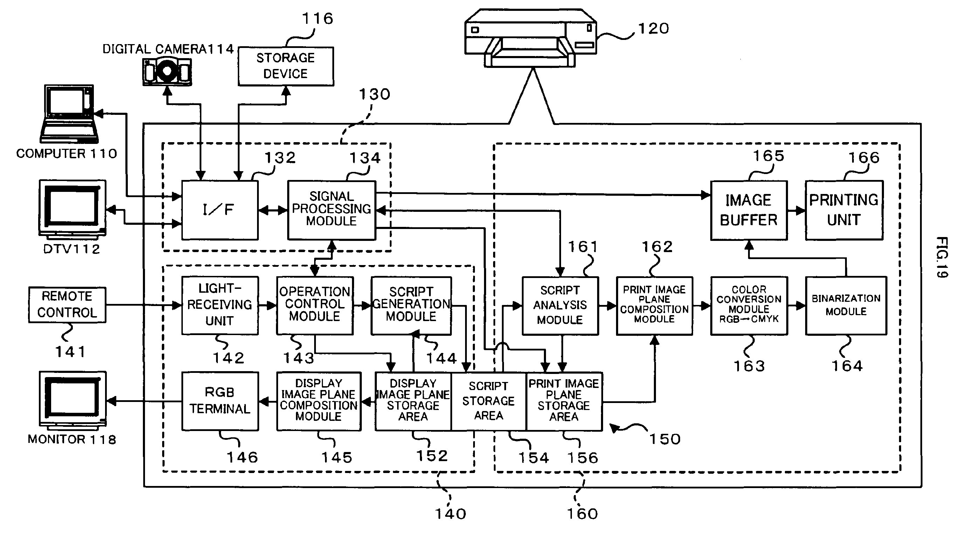

Another printer 120 is described below as a second embodiment of the invention. Fig. 19 schematically illustrates the configuration of the inkjet printer 120 in the second embodiment of the invention. In the printer 120 of the second embodiment, an input module 130 is connected to a computer 110, a digital TV receiver 112, a digital camera 114, and a storage device 116 of memory card or another storage medium and inputs digital images (hereafter simply referred to as images) from such connected devices. The printer 120 also includes a print editing module 140 that displays the input images from the input module 130 on a monitor 118 and edits and lays out object images to be printed in response to the user's operations of a remote control terminal 141 (hereafter referred to as the remote control), and a print execution module 160 that prints the input images from the input module 130 and the object images edited and laid out by the print editing module 140. A memory 150 of the printer 120 is included in both the print editing module 40 and the print execution module 160 and has a display image plane storage area 152, a script storage area 154, and a print image plane storage area 156. The monitor 118 may be a standard display or a general TV receiver with video input terminals.

The input module 130 includes an input interface 132 that receives input signals of the images from the computer 110, the digital TV receiver 112, the digital camera 114, and the storage device 116, and a signal processing module 134 that allocates data to one of multiple output destinations corresponding to the format of each input signal received by the input interface 132. When the input signal represents print data immediately printable without any processing, the output destination specified by the signal processing module 134 is an image buffer 165 of the print execution module 160. When the input signal represents RGB image data, the specified output destination is the print image plane storage area 156 of the memory 150. When the input image represents a file described in a selected markup language (for example, XHTML language), the specified output destination is a script analysis module 161 of the print execution module 160. The image buffer 165 and the script analysis module 161 will be described in detail later.

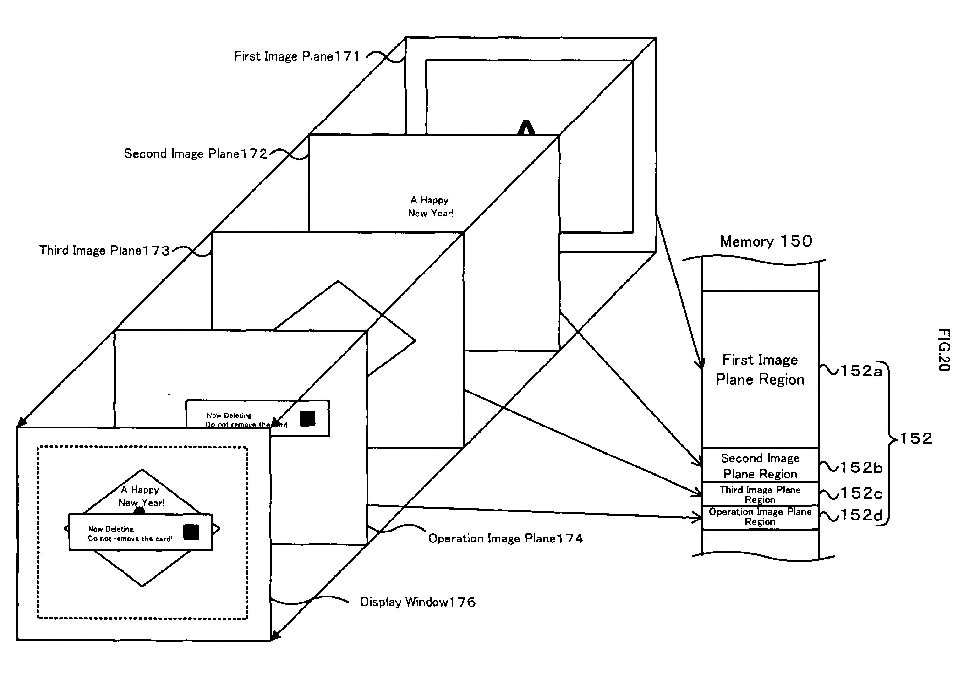

The print editing module 140 includes a light-receiving unit 142 that receives signals from the remote control 141, and an operation control module 143 that utilizes the display image plane storage area 152 of the memory 150 to draw images and characters on three image planes having different information volumes per pixel, to specify a printing area, and to change the layout of the images and the characters, in response to the user's operations of the remote control 141. The print editing module 140 also has a script generation module 144 that generates a script describing the contents drawn on the three image planes in a selected description language and stores the generated script into the script storage area 154 of the memory 150, and a display image plane composition module 145 that combines these three image planes with an image plane for operations and outputs a composite image plane to an RGB terminal 46 linked to the monitor 118. Fig. 20 shows allocation of these image planes for display to the structure of the display image plane storage area 152 of the memory 150. In the second embodiment, as shown in Fig. 20, the display image plane composition module 145 combines a first image plane 171, a second image plane 172, and a third image plane 173 as the three image planes having different information volumes per pixel with an operation image plane 174 as the image plane for operations and outputs a composite image plane as a display window 176 to be displayed on the monitor 118. In the second embodiment, the first image plane 171 has the information volume per pixel set to 4 bytes to enable full color display, whereas the second image plane 172 has the information volume per pixel set to 1 byte to enable 256 color display. The third image plane 173 has 1 bit as the minimum information volume per pixel to set either printing or non-printing in each pixel. The operation image plane 174 has the information volume per pixel set to 4 bits to ensure transmission of information on editing operations. The first image plane 171, the second image plane 172, the third image plane 173, and the operation image plane 74 are respectively allocated to a first image plane region 152a, a second image plane region 152b, a third image plane region 152c, and an operation image plane region 152d in the display image plane storage area 152 of the memory 150. The operation control module 143 draws full color images on the first image plane 171, draws 256-color images and characters on the second image plane 172, and specifies a printing area on the third image plane 173.. The first image plane 171, the second image plane 172, and the third image plane 173 are designed to have whole display areas equivalent to printable areas, regardless of the size of printing paper. The functions of the operation control module 143 to draw images and characters and the functions of the script generation module 144 to generate a script will be described in detail later.

The display image plane composition module 145 draws the contour line of a printing area specified in the third image plane 173 on a composite image plane of the first image plane 171 and the second image plane 172, further combines the composite image plane with the operation image plane 174, and outputs a resulting composite image plane as the display window 176 to the RGB terminal 146. In the structure of the second embodiment, the information volume per pixel is respectively set to 4 bytes for the first image plane 171, to 1 byte for the second image plane 172, and to 4 bits for the operation image plane 174. The display image plane composition module 145 accordingly converts the information volumes per pixel set for the second image plane 172 and the operation image plane 174 into 4 bytes, which is equal to the information volume set for the first image plane 171, prior to the composition. In the structure of the second embodiment, the display image plane composition module 145 is constructed as a hardware element (video chip) for the high-speed conversion and composition.

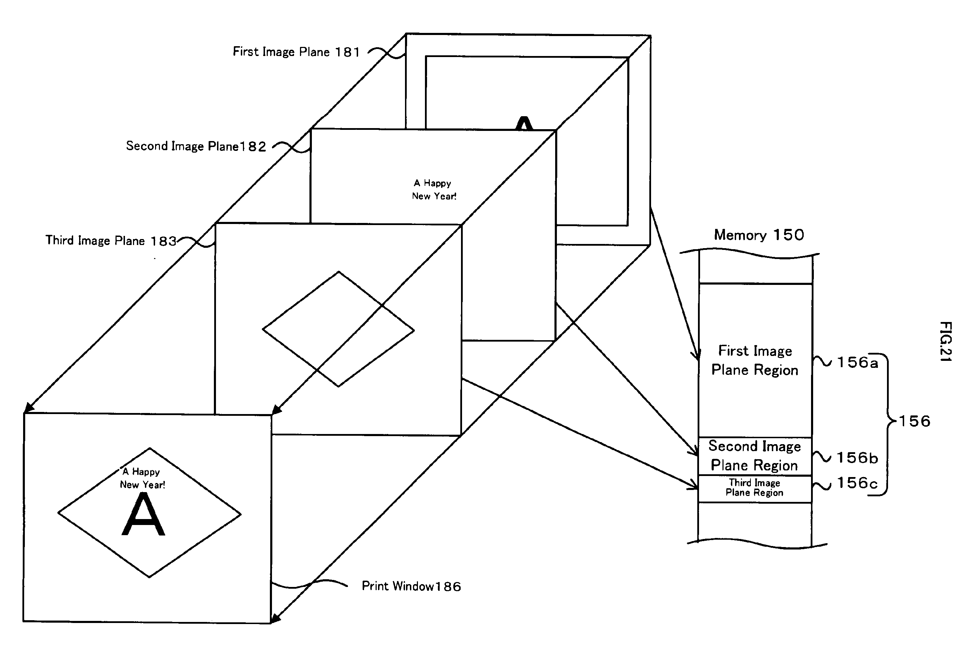

In the print execution module 160, the script analysis module 161 reads and analyzes the script stored in the script storage area 154 or the file described in the selected markup language and output from the signal processing module 134, and utilizes the print image plane storage area 156 of the memory 150 to draw object images to be printed on three image planes having different information volumes per pixel. The print execution module 160 also includes a print image plane composition module 162 that generates a composite print window expressed as RGB data, based on the object images drawn on the three image planes, and a color conversion module 163 that converts the RGB data of the print window into CMYK data. The print execution module 160 further has a binarization module 164 that makes the color-converted CMYK data subject to a preset series of image processing, for example, an error diffusion process, for binarization, and an image buffer 165 that temporarily accumulates the binarized CMYK data to be output in band units to a printing unit 166 with a print head (not shown). Fig. 21 shows allocation of these image planes for printing to the structure of the print image plane storage area 156 of the memory 150. In the second embodiment, as shown in Fig. 21, the print image plane composition module 162 combines a first image plane 181, a second image plane 182, and a third image plane 183 as the three image planes having different information volumes per pixel to a composite image plane as a print window 186. In the second embodiment, the first image plane 181 has the information volume per pixel set to 4 bytes to enable full color display, whereas the second image plane 182 has the information volume per pixel set to 1 byte to enable 256 color display. The third image plane 183 has 1 bit as the information volume per pixel to set printing or non-printing in each pixel. These settings correspond to those of the first image plane 171, the second image plane 172, and the third image plane 173 for display. The first image plane 181, the second image plane 182, and the third image plane 183 are respectively allocated to a first image plane region 156a, a second image plane region 156b, and a third image plane region 156c in the print image plane storage area 156 of the memory 150. The script analysis module 161 draws full color images on the first image plane 181, draws 256-color images and characters on the second image plane 182, and specifies a printing area on the third image plane 183 according to the analyzed script. The sizes of the first image plane 181, the second image plane 182, and the third image plane 183 are set according to the size of the printing paper. The functions of the script analysis module 161 to analyze a script, to draw images and characters, and to specify a printing area will be described in detail later.

The print image plane composition module 162 deletes information on a residual area other than the printing area set on the third image plane 183 from a composite image plane of the first image plane 181 and the second image plane 182, and outputs a resulting final composite image plane as the print image 186 to the color conversion module 163, as described above. In the structure of the second embodiment, the information volume per pixel is respectively set to 4 bytes for the first image plane 181 and to 1 byte for the second image plane 182. The print image plane composition module 162 accordingly converts the information volume per pixel set for the second image plane 182 into 4 bytes, which is equal to the information volume set for the first image plane 181, prior to the composition. In the structure of the second embodiment, the print image plane composition module 162 and the color conversion module 163 are integrated as a one-chip hardware element for the high-speed conversion, composition, and color conversion. The color conversion module 163 and the binarization module 164 have the similar functions to those of a conventional printer driver activated to send print data to a general inkjet printer. The image buffer 165 and the printing unit 66 are typically included in the general inkjet printer. The functions and the operations of these elements are not characteristic of the invention and are thus not described here in detail.

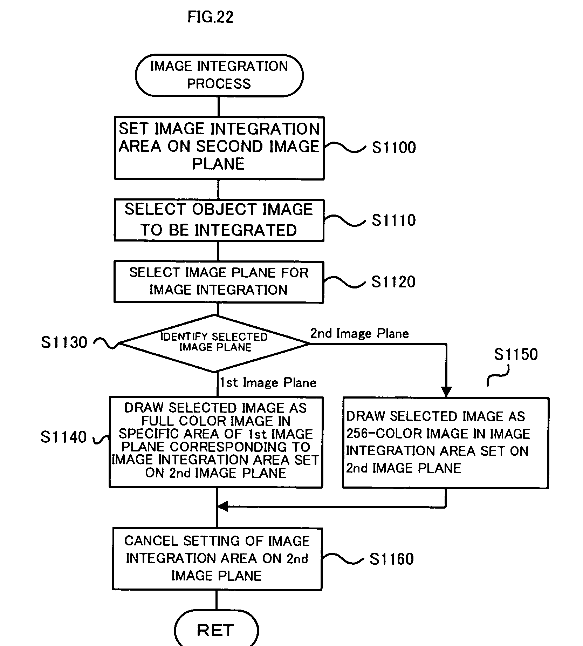

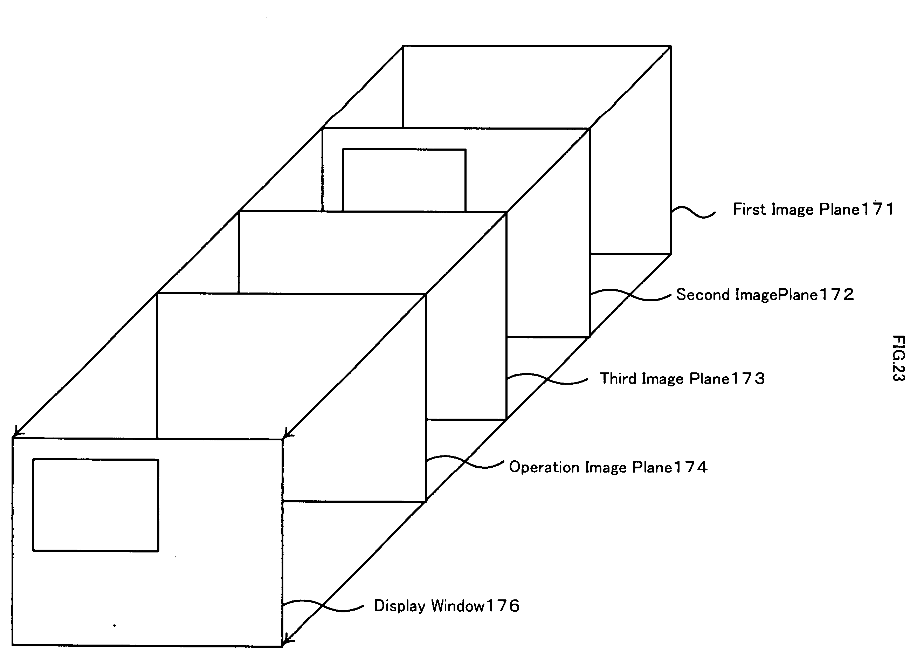

The printer 120 of the second embodiment configured as discussed above have various operations as described below. The description regards first series of operations executed by the print editing module 140 and then series of operations executed by the print execution module 160. Fig. 22 is a flowchart showing a series of image integration process executed to integrate images and generate a print window. The image integration process first sets an image integration area for integration of images on the second image plane 172, in response to the user's key operations of the remote control 141 (step S1100). For example, the user may shift a pointer displayed on the monitor 118 and manipulated with the remote control 141 to specify an upper left point and a lower right point defining a rectangular frame as a desired image integration area. Fig. 23 shows the image planes for display with setting of an image integration area. As illustrated, the image integration area set as a rectangular frame on the second image plane 172 is shown in the display window 176 on the monitor 118. The image integration area is set on the second image plane 172, since the drawing speed on the second image plane 172 is higher than the drawing speed on the first image plane 171.

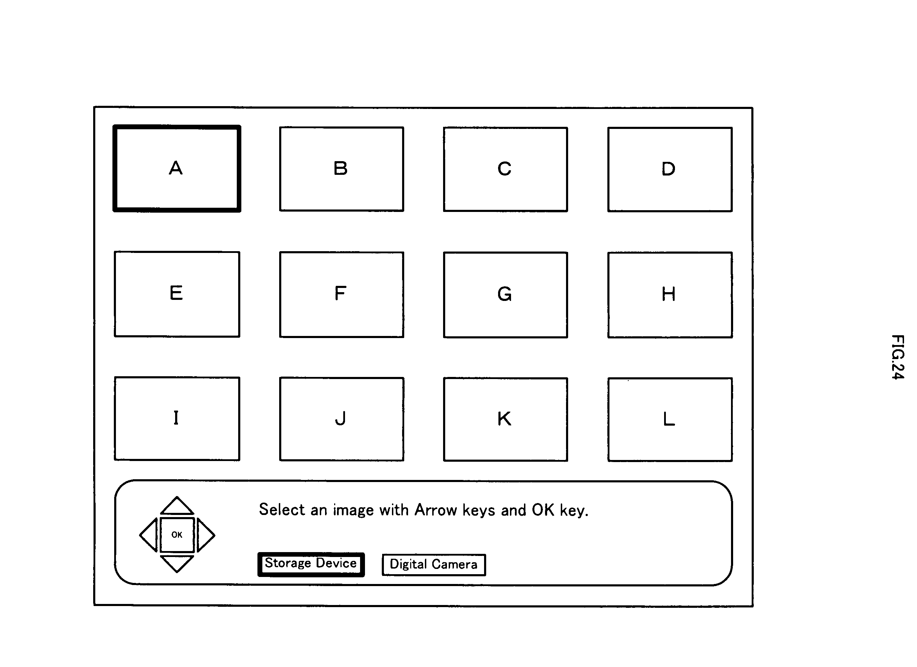

The image integration process then selects an object image to be integrated (step S1110). In response to the user's operation of the remote control 141 to specify an image storage source, thumbnail images stored in the specified image storage source are displayed on the monitor 118. The user selects a desired thumbnail image as the object image to be integrated, among the displayed thumbnail images. Fig. 24 shows an image selection window. In this illustrated example, the storage device 116 is specified as the image storage source. The user selects a desired thumbnail image with arrow keys and an OK key. The image integration process subsequently selects an image plane for integration of the selected object image between the first image plane 171 and the second image plane 172 (step S1120). For example, the user operates an image selection button (not shown) on the remote control 141 to select the image plane for image integration. The user selects the first image plane 171 for integration of a full color photographic image or another full color image, while selecting the second image plane 172 for integration of a 256-color illustration or another 256-color image.

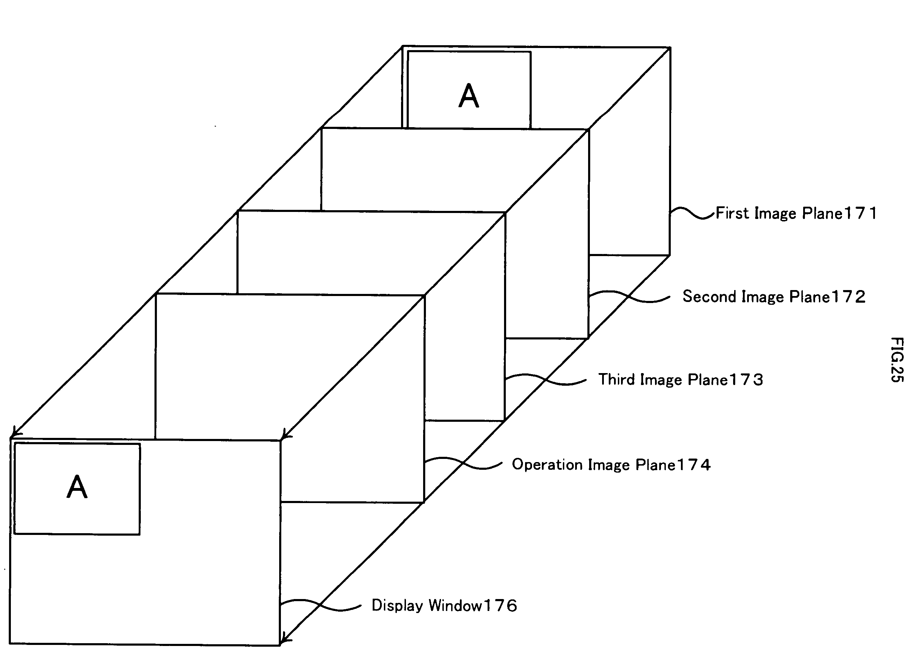

When the selected image plane for image integration is identified as the first image plane 171 (step S1130), the selected image is drawn as a full color image in a specific area of the first image plane 171 corresponding to the image integration area set on the second image plane 172 (step S1140). When the selected image plane for image integration is identified as the second image plane 172 (step S1130), on the other hand, the selected image is drawn as a 256-color image in the image integration area set on the second image plane 172 (step S1150). After drawing at step S1140 or at step S1150, the image integration process cancels the setting of the image integration area on the second image plane 172 (step S1160) and is terminated. In the illustrated example of Fig. 25, the image integration area of Fig. 23 is set on the second image plane 172, and an image A (see Fig. 24) and the first image plane 171 are selected for image integration. In the state of Fig. 25, the setting of the image integration area is cancelled on the second image plane 172. The selected image A is drawn in the specific area of the first image plane 171 corresponding to the image integration area set on the second image plane 172 and is shown in the display window 176 on the monitor 118.

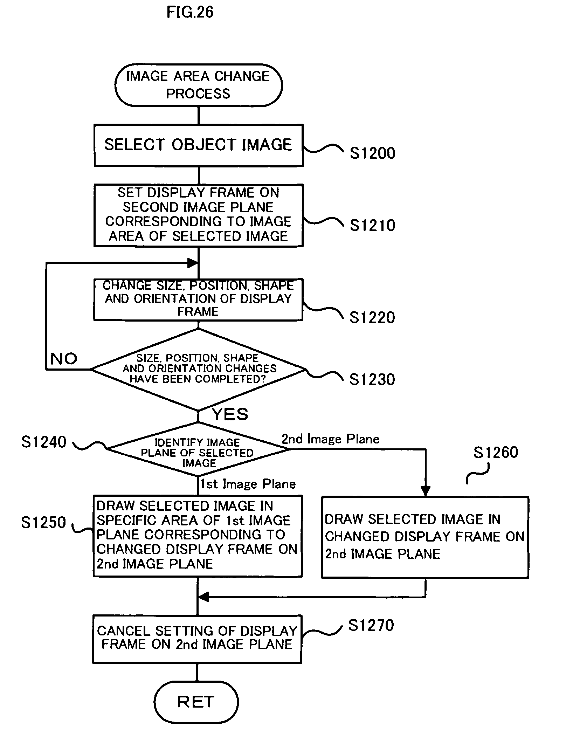

Fig. 26 is a flowchart showing a series of image area change process executed to change the size, the position, the shape, and the orientation of the integrated image. The image area change process first selects an object integrated image for a change of its image area, in response to the user's key operation of the remote control 141 (step S1200). For example, the user may shift the pointer displayed on the monitor 118 and manipulated with the remote control 141 to select a desired image.

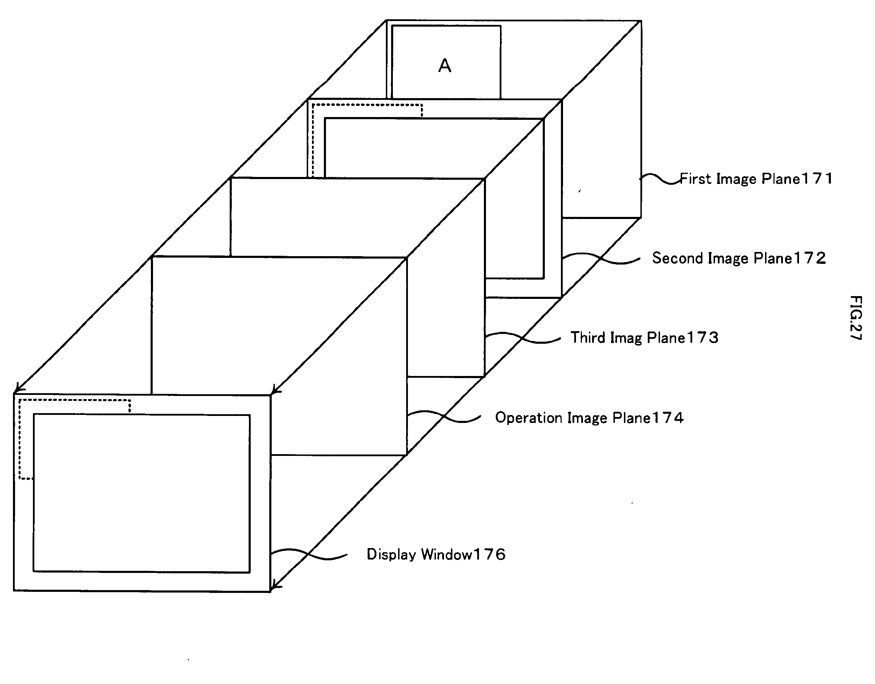

Whether the selected image is drawn on the first image plane 171 or on the second image plane 172, the image area change process sets a display frame in a specific position of the second image plane 172 corresponding to the contour of the image area of the selected image (step S1210). The display frame set on the second image plane 172 is shifted, rotated, or changed in size or in shape, in response to the user's operations of the remote control 141 (step S1220). For example, the user may hold and drag the whole rectangular display frame with the pointer displayed on the monitor 118 and manipulated with the remote control 141 to shift the position of the display frame. The user may hold and drag one of the four corners of the rectangular display frame along a diagonal line to change the size of the display frame in the diagonal direction. The user may hold and drag one of the four sides of the rectangular display frame to change the rectangular shape of the display frame. The user may operate a rotation button (not shown) on the remote control 141 to rotate the display frame. During the size, position, shape, and orientation changes of the display frame, the selected image is kept in the previous state prior to the start of the image area change process. Fig. 27 shows a process of changing the image area of a selected image A drawn on the first image plane 171. As illustrated, the display frame set in the specific position of the second image plane 172 corresponding to the contour of the image area of the selected image A drawn on the first image plane 171 may be shifted, rotated, or changed in size or in shape. Any of such size, position, shape, and orientation changes of the display frame is shown in the display window 176 on the monitor 118. Even when the selected image is drawn on the first image plane 171, the display frame is set on the second image plane 172 for any of the size, position, shape, and orientation changes. This is because the processing speed on the second image plane 72 is higher than the processing speed on the first image plane 171.

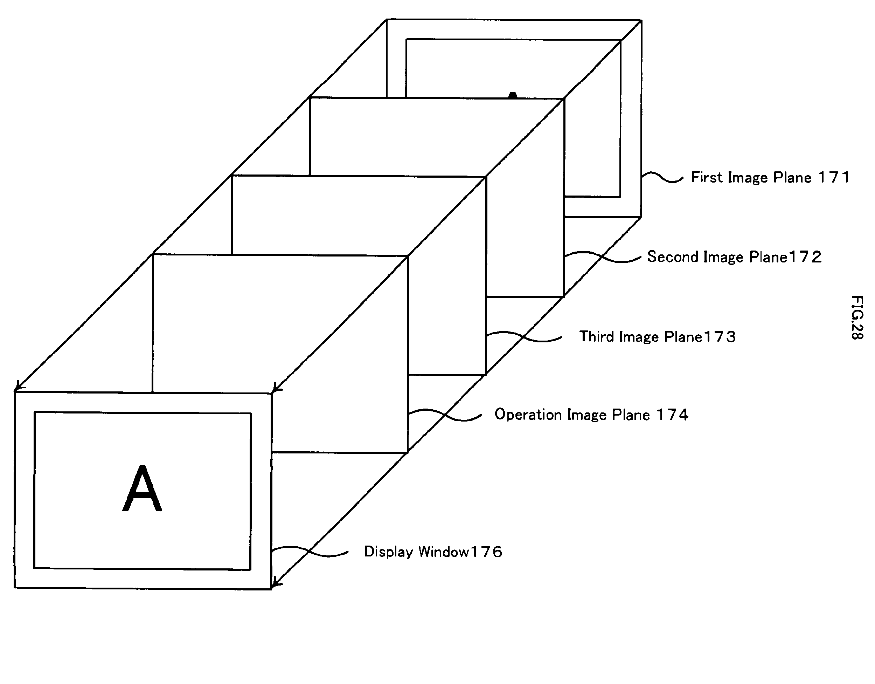

On completion of the size, position, shape, and orientation changes of the display frame, for example, in response to the user's operation of an OK button (not shown) on the remote control 141 (step S1230), the image plane of the selected image is identified (step S1240). When the identified image plane is the first image plane 171 (step S1240), the selected image is drawn in a specific area of the first image plane 171 corresponding to the changed display frame on the second image plane 172 (step S1250). When the identified image plane is the second image plane 172 (step S1240), on the other hand, the selected image is drawn in the changed display frame on the second image plane 172 (step S1260). The image area change process then cancels the setting of the display frame on the second image plane 172 (step S1270) and is terminated. In the illustrated example of Fig. 28, on completion of the size, position, shape, and orientation changes of the display frame of Fig. 27, the display frame set on the second image plane 172 is cancelled. The selected image A is drawn in the specific area of the first image plane 171 corresponding to the changed display frame on the second image plane 172 and is shown in the display window 176 on the monitor 118.

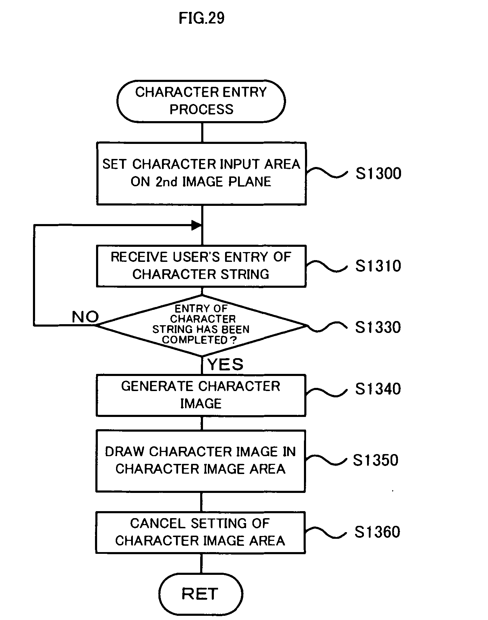

Fig. 29 is a flowchart showing a series of character entry process executed to enter characters on the second image plane 172. The character entry process first sets a character input area for entry of a character string on the second image plane 172, in response to the user's key operations of the remote control 141 (step S1300). For example, in the same manner as step S1100 in the image integration process of Fig. 22, the user may shift a pointer displayed on the monitor 118 and manipulated with the remote control 141 to specify an upper left point and a lower right point defining a rectangular frame as a desired character input area. The character entry process then receives the user's entry of a character string by the operations of the remote control 141 (step S1310). For example, the user may enter a character string by operations of a software keyboard displayed on the monitor 118 with a pointer manipulated with the remote control 141. In another example, the user may operate ten keys on the remote control 141 to enter a character string. The user may operate the remote control 141 to specify the character font and color in this character entry process.

On completion of the user' s entry of the character string, for example, in response to the user's operation of an OK button (not shown) on the remote control 141 (step S1330), the character entry process creates a file for specifying the entered character string as a character image (step S1340). The size of the character image is set to ensure sufficiently clear printing of the character font even when the character input area is doubled. The character image has 1 bit set to the information volume per pixel. The file has a header for storage of information on the specified character font and color. Namely the character image of the second embodiment is generated as a bitmap image of monochromatic characters having the 4-fold through 16-fold size of the character input area. The character image is displayed in the specified character color, based on the color information of the header. The generated character image is integrated in the character input area (step S1350) in a similar manner to integration of the selected image in the image integration area in the image integration process of Fig. 22. The character entry process then cancels the setting of the character input area on the second image plane 172 (step S1360) and is terminated. The image area change process of Fig. 26 may be executed to change the size, the position, the shape, and the orientation of a display frame for the character image representing the entered character string. The generated character image is stored as a character image file in the user's selected device, for example, in a selected folder in the storage device 116.

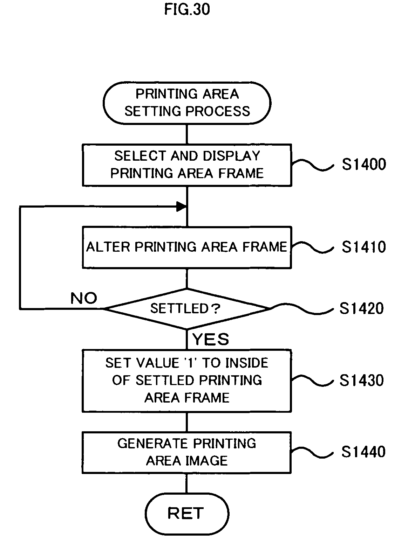

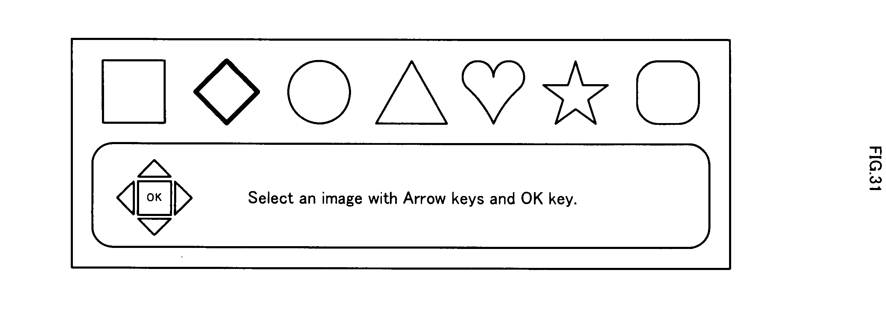

Fig. 30 is a flowchart showing a series of printing area setting process executed to specify a printing area on the third image plane 173. The printing area setting process first selects a desired printing area frame, in response to the user's key operation on the remote control 141 and displays the selected printing area frame on the third image plane 173 (step S1400). Available options of printing area frames are set in advance and displayed on the operation image plane 174. The user operates the remote control 141 to select a desired printing area frame among the displayed options. Fig. 31 shows a printing area frame selection window open on the operation image plane 174.

The printing area frame displayed on the third image plane 173 is shifted, rotated, or changed in size, in response to the user's operations of the remote control 141 (step S1410) in a similar manner to the operation at step S1220 in the image area change process of Fig. 26. When the user operates the OK button on the remote control 141 to settle the printing area frame (step S1420), a value '1' is set to the inside of the settled printing area frame (step S1430). The printing area setting process then generates a 1 bit-1 pixel printing area image, which has a size corresponding to a maximum paper size printable by the printer 120, on the third image plane 173 (step S1440) and is terminated. The generated printing area image is stored as a printing area image file in the user's selected device, for example, in a selected folder in the storage device 116.

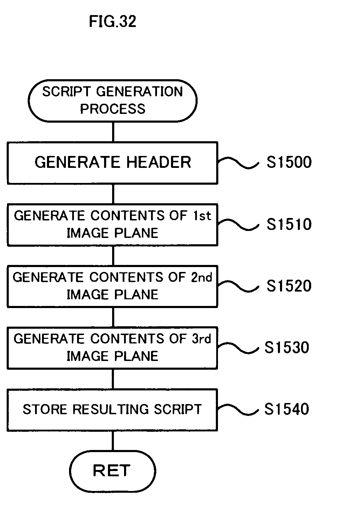

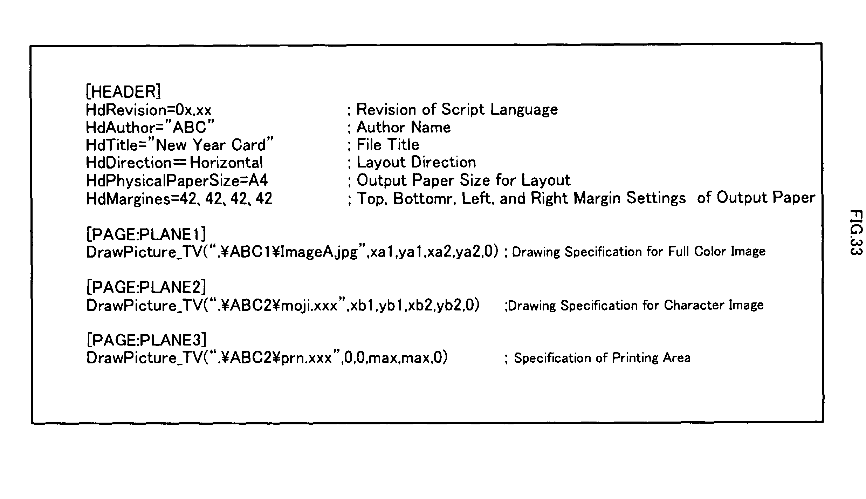

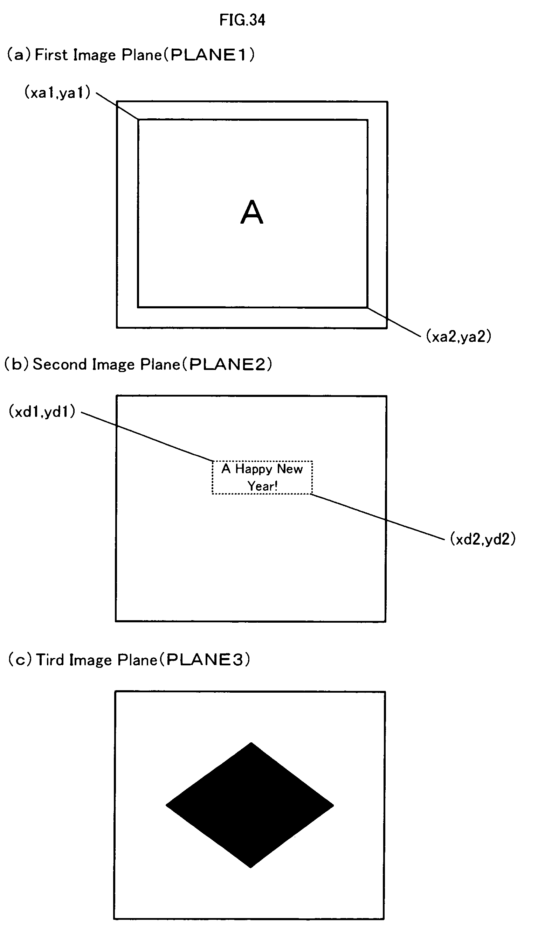

The contents of a resulting print window with image integration, character entry, and specification of a printing area are described in a script. Fig. 32 is a flowchart showing a series of script generation process. Fig. 33 shows one example of a script thus generated. Fig. 34 shows the first image plane 171, the second image plane 172, and the third image plane 173 according to the script of Fig. 33. The script generation process of Fig. 32 executed by the script generation module 144 sequentially generates a header (step S1500), the contents of the first image plane 171 (step S1510), the contents of the second image plane 172 (step S1520), and the contents of the third image plane 173 (step S1530) as a script, and stores the generated script in the script storage area 154 of the memory 150 (step S1540). In the script of Fig. 33 described in the selected script language of the second embodiment, the header includes an identifier 'HEADER', the revision of the script language, the author name, the file title, the layout direction, the output paper size for the layout, and the top, bottom, left, and right margin settings of the output paper in this sequence. The contents of the first image plane 171 are described after an identifier 'PAGE: PLANE 1'. In the illustrated example of Figs. 33 and 34, the description on the first image plane 171 includes drawing specification of an image A. A description 'DrawPicture_TV' for drawing specification of each image includes variables specifying the name and the pass of the image file, the x coordinate at the upper left corner of the image area, the y coordinate at the upper left corner of the image area, the x coordinate at the lower right corner of the image area, the y coordinate at the lower right corner of the image area, and rotation of the image. In the structure of the second embodiment, the variable specifying rotation of the image is set to '0' for no rotation, to '1' for a clockwise rotation of 90 degrees, to '2' for a clockwise rotation of 180 degrees, to '3' for a clockwise rotation of 270 degrees, and to '4' for an auto rotation. The contents of the second image plane 172 are described after an identifier 'PAGE: PLANE 2'. In the illustrated example of Figs. 33 and 34, the description on the second image plane 172 includes drawing specification of a character image. The contents of the third image plane 173 are described after an identifier 'PAGE: PLANE 3'. In the illustrated example of Figs. 33 and 34, the description on the third image plane 173 includes allocation of a printing area image file representing a specified rhomboidal printing area over the whole image plane. Allocation of the printing area image file over the whole image plane desirably enables each object image area to be drawn accurately, regardless of the size of printing paper and the size of the printing area image.

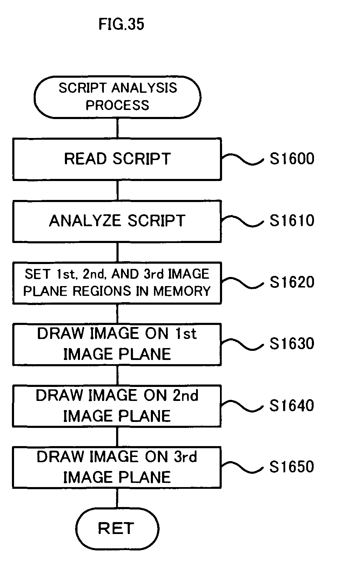

The script generated and stored in the script storage area 154 of the memory 150 is read and analyzed by the script analysis module 161, in response to the user's operation of a print button (not shown) on the remote control 141. The analyzed script is drawn as the first image plane 181, the second image plane 182, and the third image plane 183 for printing in the print image plane storage area 156 of the memory 150. Fig. 35 is a flowchart showing a series of script analysis process. The script analysis process first reads a script from the script storage area 154 of the memory 150 (step S1600), analyzes the header in the script (step S1610), and sets the first image plane 181, the second image plane 182, and the third image plane 183, that is, the first image plane region 156a, the second image plane region 156b, and the third image plane region 156c of the print image plane storage area 156, based on the information on the output paper size stored in the analyzed header (step S1620). The script analysis process then draws an image on the first image plane 181 based on the description of the script after the identifier 'PAGE: PLANE 1' (step S1630), draws an image on the second image plane 182 based on the description of the script after the identifier 'PAGE: PLANE 2' (step S1640), and draws an image on the third image plane 183 based on the description of the script after the identifier PAGE: PLANE 3' (step S1650). The concrete procedure reads each specified image file from a specified pass in the script and draws the image of the specified image file in a specified orientation in a specified image area.

The first image plane 181 and the second image plane 182 with the images drawn corresponding to the first image plane region 156a and the second image plane region 156b of the print image plane storage area 156 are combined to a composite image plane by the print image plane composition module 162 as described above. Subsequent deletion of information on the residual area other than the printing area set on the third image plane 183 from the composite image plane of the first image plane 181 and the second image plane 182 gives a resulting final composite image plane as the print window 186, which is output to the color conversion module 163. The print window 186 is converted into CMYK data by the color conversion module 163, is binarized with regard to each of the colors C, M, Y, and K by the binarization module 164, is temporarily stored in the image buffer 165, and is output to the output paper by the printing unit 166.

In the structure of the second embodiment, the script analysis module 161 analyzes the script described in the script language, sets the first image plane region 156a and the second image plane region 156b in the print image plane storage area 156, and draws the images in the first image plane 181 and in the second image plane 182. The script analysis module 161 may also analyze a top page described in a markup language, set the first image plane region 156a in the print image plane storage area 156, and draw the images in the first image plane 181. In this case, no images are drawn in the second image plane 182. After the images are drawn in the first image plane 181 based on the top page described in the markup language, the print image plane composition module 162 combines the first image plane 181 including the drawn images with the second image plane 182 including no drawn images to a composite image plane and transfers the composite image plane to the color conversion module 163. The processing of and after the color conversion module 163 to print the images based on the top page described in the markup language is identical with that to print the images based on the script described in the script language.

As described above, the printer 120 of the second embodiment sets a printing area on the third image plane 173 and displays the printing area set on the third image plane 173, such that the composite image plane of the first image plane 171 and the second image plane 172 is visually recognizable. This arrangement enables the user to readily set a desired printing area while referring to the images drawn on the first image plane 171 and the second image plane 172. The technique of using the third image plane 173 to set a printing area and a residual non-printing area is especially effective for printing on compact disks (CD). A composite print window is generated by deleting information on the residual area other than the printing area set on the third image plane 183 from the composite image plane of the first image plane 181 and the second image plane 182, which have different information volumes per pixel and include images drawn thereon. This ensures printing of only the images included in the set printing area. The third image plane 173 for display and the third image plane 183 for printing have only the 1-bit information volume per pixel and thus do not significantly expand the required memory capacity.

The printer 120 of the second embodiment uses the first image plane 171 and the second image plane 172 having different information volumes per pixel to integrate images and enter characters for editing a print window. This arrangement desirably reduces the required memory capacity and shortens the required time for drawing and editing, compared with the conventional structure that uses multiple image planes having large information volumes per pixel to draw and edit images and characters. The second image plane 172 having the less information volume per pixel is used to set the image integration area required for integration of images and to set the display frame required for editing. This ensures prompt editing. The information required for device operations is displayed on the operation image plane 174. The first image plane 171, the second image plane 172, the printing area frame set on the third image plane 173, and the operation image plane 174 are combined to a composite image plane, which is displayed as the display window 176 on the monitor 118. The editing results on the respective image planes are described as a script. The print execution process analyzes the script and integrates the images on the image planes. This arrangement effectively avoids potential troubles, such as the lowered picture quality of images by editing. Description of the editing results on the image planes as a script is suitable for transmission of the editing results in the form of a file and for interruption of editing. In the case of entry of characters, a character image representing the entered character string is generated and is processed in the same manner as the general picture images. Namely the character images and the picture images are treated in a similar manner. The printer 120 may be connected directly to the computer 110, the digital TV receiver 112, the digital camera 114, and the storage device 116 to input, edit, and print images.

The memory 150 including the display image plane storage area 152 and the print image plane storage area 156 in the printer 120 of the second embodiment corresponds to the image plane information storage module in the second printing device of the invention. The operation control module 143 executing the image integration process of Fig. 22, the image area change process of Fig. 26, and the character entry process of Fig. 29 and the script generation module 144 executing the script generation process of Fig. 32 are equivalent to the drawing editing module in the second printing device of the invention. The operation control module 143 executing the printing area setting process of Fig. 30 and the script generation module 144 executing the script generation process of Fig. 32 are equivalent to the printing area setting module in the second printing device of the invention. The display image plane composition module 145 corresponds to the display data generation module in the second printing device of the invention. The script analysis module 161 executing the script analysis process of Fig. 35 and the print image plane composition module 162 are equivalent to the print data generation module in the second printing device of the invention.

The printer 120 of the second embodiment uses the first image plane 171 having the 4-byte information volume per pixel and the second image plane 172 having the 1-byte information volume per pixel to draw images and characters. The third image plane 173 having the 1-bit information volume per pixel is used to set the printing area in the composite image plane of the first image plane 171 and the second image plane 172. In one possible modification, all images and characters may be drawn on a single image plane having the 4-byte information volume per pixel. The third image plane 173 is used to set a printing area in the single image plane.

In the printer 120 of the second embodiment, the third image plane 173 has the information volume per pixel set to 1 bit. The information volume per pixel is, however, not restricted to this value, but may be set to a greater value. In the printer 120 of the second embodiment, the first image plane 171 has the information volume per pixel set to 4 bytes and the second image plane 172 has the information volume per pixel set to 1 byte. The information volumes per pixel of the first image plane 171 and the second image plane 172 are, however, not restricted to these values but may be set arbitrarily.

The printer 120 of the second embodiment uses the two image planes having different information volumes per pixel (the first image plane 171 and the second image plane 172) to draw and edit images. Three or more image planes having different information volumes per pixel may be used to draw and edit images.

The printer 120 of the second embodiment uses the first image plane 171 and the second image plane 172 having different information volumes per pixel to draw and edit images, while using the third image plane 173 to set a printing area. The frame of the printing area set on the third image plane 173 is combined with a composite image plane of the first image plane 171 and the second image plane 172. Further superposition of the operation image plane 174 for device operations gives a final composite image plane, which is displayed as the display window 176 on the monitor 118. One possible modification may omit the operation image plane 174 and use the second image plane 172 for device operations.

The printer 120 of the second embodiment uses the third image plane 173 to set a desired printing area and generates and processes a printing area image over the whole third image plane 173. Only the preset printing area may be processed as the image.

The printer 120 of the second embodiment generates a bitmap character image corresponding to an entered character string by taking into account the size of the character input area. The generated bitmap character image is subjected to the subsequent series of image processing in the same manner as the general picture images. Each character in the entered character string may otherwise be processed as character data.

The printer 120 of the first embodiment uses the script language shown in Fig. 33 to describe the contents of the first image plane 171, the second image plane 172, and the third image plane 173 as a script. Any script language may be adopted for such description. For example, in the second embodiment, the description 'DrawPicture_TV' for drawing specification of each image includes variables specifying the name of the image file, the x coordinate at the upper left corner of the image area, the y coordinate at the upper left corner of the image area, the x coordinate at the lower right corner of the image area, the y coordinate at the lower right corner of the image area, and the rotation of the image. In one possible modification, the name of the image file in the description may be replaced by an object number, and a list of the object number mapped to the name of each image file may be described separately.

The printer 120 of the second embodiment uses the script language to describe the contents of the first image plane 171, the second image plane 172, and the third image plane 173 as a script. A markup language, such as the XHTML language, may be used to describe the contents of the first image plane 171, the second image plane 172, and the third image plane 173.

In the printer 120 of the second embodiment, the operation control module 143 uses the display image plane storage area 152 of the memory 150 to draw images on the first image plane 171 and the second image plane 172 and to set the printing area on the third image plane 173. The script generation module 144 describes the contents of the first image plane 171, the second image plane 172, and the third image plane 173 as a script and stores the script in the script storage area 154. In the printing process, the script analysis module 161 analyzes the script stored in the script storage area 154 and uses the print image plane storage area 156 to draw images on the first image plane 181, the second image plane 182, and the third image plane 183. The first image plane 181, the second image plane 182, and the third image plan 183 are combined to a composite image plane as the print window 186 for printing. The operation control module 143 may use the print image plane storage area 156 of the memory 150 to draw images on the first image plane 181 and the second image plane 182, instead of using the display image plane storage area 152 to draw images on the first image plane 171 and the second image plane 172. The operation control module 143 may also use the print image plane storage area 156 to set the printing area on the third image plane 183, instead of using the display image plane storage area 152 to set the printing area on the third image plane 173.

In the printer 20 of the first embodiment and the printer 120 of the second embodiment, the memories 50 and 150 respectively have the print image plane storage areas 56 and 156. In one possible modification, the respective memories 50 and 150 may not have the print image plane storage areas 56 and 156. The results of analysis by the script analysis module 61 or 161 are sent in units of data volume corresponding to the height of a print head (in units of 1 band) to the print image plane composition module 62 or 162 for composition. The composite image data goes through the series of image processing executed by the color conversion module 63 or 163 and the subsequent processing modules. This modified arrangement handles each image file as a script and ensures high-speed image processing. The results of analysis by the script analysis module 61 or 161 may be stored as a script in, for example, a storage device, simultaneously with the analysis. This requires only the small memory capacity to store each image file described as a script. The stored image file may be printed according to the requirements. In the printing process, the print image plane composition module 62 or 162 combines the results of analysis of the script to generate print data.

In the printer 20 of the first embodiment and the printer 120 of the second embodiment, the contents of a print window generated by image integration, character entry, and specification of a printing area are described as a script. The integrated images may go through another series of processing, prior to description in the script. For example, an image file may have attachment of image correction information. The process of image integration may perform image correction based on the image correction information. The image correction information may be, for example, print control information or shooting information. When the image file has no attachment of image correction information, the process of image integration may sample image data and perform auto lightness adjustment, auto saturation adjustment, and auto contrast adjustment based on the sampling results. The image correction may be executed in a non-illustrated work area at the timing when the script analysis module 61 or 161 analyzes the script generated by the script generation module 44 or 144 and finds the pass of an object image to be integrated. The time-consuming correction process is performed after finding of the pass of an object image to be integrated but before image composition by the print image plane composition module 62 or 162. This arrangement ensures the smooth and prompt image composition by the print image plane composition module 62 or 162.

The printer 20 of the first embodiment and the printer 120 of the second embodiment generally receive print data, which are printable without any further processing, from the computers 10 and 110. The input module 30 or 130 thus outputs the received print data to the image buffer 65 or 165 of the print execution module 60 or 160. In these embodiments, the computer 10 or 110 edits image data on its peripheral monitor. In one possible modification, the printer 20 or 120 may alternatively edit image data on the digital TV receiver 12 or 112. In this modified structure, the computer 10 or 110 may be designed to set a printer edit mode, which allows the printer 20 to edit image data on the digital TV receiver 12 or 112. The printer 20 or 120 receives RGB data, instead of the binarized CMYK print data, from the computer 10 or 110. In the printer edit mode, the input module 30 or 130 writes the input RGB data into the display image plane storage area 52 or 152 of the memory 50 or 150. This modified arrangement enables the image data sent from the computer 10 or 110 to be edited by the printer 20 or 120 on the digital TV receiver 12 or 112.

In the printer 20 of the first embodiment and the printer 120 of the second embodiment, the contents of a print window generated by image integration, character entry, and specification of a printing area are described as a script. One modified structure may set a frame, generate a print window with image integration, character entry, and specification of a printing area in the frame, and describe the contents of the print window as a script. The frame may be written in the first image plane region 52a or 152a having the greatest information volume per pixel in the display image plane storage area 52 or 152 and may be drawn on the first window 70 or 171. The frame may otherwise be written in the second image plane region 52b or 152b or in the third image plane region 152c having the less information volume per pixel in the display image plane storage area 52 or 152 and may be drawn on the second window 72 or 172 on the third window 173. The script generation module 44 or 144 generates a script describing a storage location of the frame and a storage location of image data incorporated in the frame.

The first embodiment and the second embodiment regard application of the invention to the printer 20 and the printer 120. The technique of the invention is also applicable to output devices that display output images, such as projectors. This application to the output device does not require any of the color conversion module 63 or 163, the binarization module 64 or 164, the image buffer 65 or 165, and the printing unit 66 or 166, and directly outputs RGB data from the print image plane composition module 62 or 162. The technique of the invention may be actualized as a print script generation method of generating a script used for printing image data in a predetermined layout on an appropriate medium, such as paper, as an output method of outputting image data in a predetermined layout on an appropriate medium, such as paper, and as an image data editing method of editing image data on a specified monitor.

The embodiments and their modified examples discussed above are to be considered in all aspects as illustrative and not restrictive. There may be many other modifications, changes, and alterations without departing from the scope or spirit of the main characteristics of the present invention.

### Industrial Applicability

The technique of the invention is preferably applicable to manufacturing industries of printers and other printing devices, as well as projectors and other output devices.

## Claims

1. A printing device that prints picture images and characters on a printing medium, such as paper, said printing device comprising:
an image plane information storage module that stores information, which regards multiple image planes having different information volumes per pixel, in memory regions allocated to the multiple image planes;
a drawing editing module that draws selected part of the picture images and the characters on each of the multiple image planes accompanied with storage of data representing the selected part of the picture images and the characters in a corresponding memory region allocated to the image plane, and edits the selected part of the picture images and the characters drawn on the image plane;
a display data generation module that combines the multiple image planes to one composite display window, based on the information stored in said image plane information storage module, and generates display data representing the composite display window; and
a print data generation module that combines at least two image planes out of the multiple image planes to one composite print window, based on the information stored in said image plane information storage module, and generates print data representing the composite print window.

2. A printing device in accordance with claim 1, wherein the multiple image planes include a picture image plane having the information volume per pixel set to a first information volume for drawing a color picture image, and a character image plane having the information volume per pixel set to a second information volume, which is lower than the first information volume, for drawing at least either of a character and a simple illustration, and
said print data generation module combines at least the picture image plane with the character image plane to the composite print window and generates the print data representing the composite print window.

3. A printing device in accordance with claim 2, wherein said display data generation module lays the character image plane on the picture image plane to the composite display window and generates the display data representing the composite display window, and
said print data generation module lays the character image plane on the picture image plane to the composite print window and generates the print data representing the composite print window.

4. A printing device in accordance with either one of claims 2 and 3, wherein the first information volume enables each picture image to be displayed in full color, and
the second information volume allows for display of color information having a volume of not greater than half the first information volume.

5. A printing device in accordance with claim 4, wherein the first information volume is 4 bytes, and the second information volume is 1 byte.

6. A printing device in accordance with any one of claims 2 through 5, wherein the multiple image planes further include an operation image plane for drawing information on a device operation,
said display data generation module lays the operation image plane as an upper-most layer of the composite display window and generates the display data representing the composite display window, and
said print data generation module combines the image planes other than the operation image plane to the composite print window and generates the print data representing the composite print window.

7. A printing device in accordance with claim 6, wherein the operation image plane has the information volume per pixel set to a third information volume, which is lower than the second information volume.

8. A printing device in accordance with either one of claims 6 and 7, wherein the third information volume is 4 bits.

9. A printing device in accordance with any one of claims 2 through 8, wherein said drawing editing module acquires each picture image and draws the acquired picture image on the picture image plane.

10. A printing device in accordance with any one of claims 2 through 9, wherein said drawing editing module, in response to an image drawing instruction, sets a movable outer frame for image layout on the character image plane and draws a picture image in a specific area on the picture image plane corresponding to the outer frame.

11. A printing device in accordance with any one of claims 2 through 10, wherein said drawing editing module, in response to an image layout change instruction, displays an outer frame for image layout at a specific position on the character image plane, which corresponds to contour of a picture image drawn on the picture image plane, changes the displayed outer frame for image layout, and redraws the picture image in a specific area on the picture image plane corresponding to the changed outer frame.

12. A printing device in accordance with any one of claims 2 through 11, wherein said drawing editing module draws a character string on the character image plane and handles the drawn character string as a character image for subsequent processing.

13. A printing device in accordance with any one of claims 1 through 12, wherein said drawing editing module allocates plural drawing objects, such as picture images and characters, to the multiple image planes and generates a script file described in a language of selected format with regard to the allocation of the plural drawing objects, and
said print data generation module analyzes the script file to generate the print data.

14. A printing device in accordance with claim 13, wherein said drawing editing module describes the allocation of the plural drawing objects with regard to each of the multiple image planes and generates the script file.

15. A printing device in accordance with either one of claims 13 and 14, wherein the script file has description of information, which includes object identification information identifying each of the plural drawing objects to be drawn on the multiple image planes and layout information representing a layout of the plural drawing objects on the multiple image planes.

16. A printing device in accordance with any one of claims 13 through 15, wherein said display data generation module analyzes the script file to generate the display data.

17. A printing device in accordance with any one of claims 1 through 16, wherein said drawing editing module performs the drawing and editing in response to reception of electromagnetic wave from an operating panel manipulated by a user.

18. A printing device in accordance with any one of claims 1 through 17, wherein said display data generation module converts pixel information on each pixel in each of the multiple image planes into corresponding pixel information of a maximum information volume per pixel adopted in at least one image plane among the multiple image planes having the different information volumes per pixel, and generates the display data representing the composite display window.

19. A printing device in accordance with any one of claims 1 through 18, wherein said print data generation module converts pixel information on each pixel in each of the multiple image planes into corresponding pixel information of a maximum information volume per pixel adopted in at least one image plane among the multiple image planes having the different information volumes per pixel, and generates the print data representing the composite print window.

20. A printing device in accordance with any one of claims 1 through 19, wherein said display data generation module outputs RGB data as the display data.

21. A printing device in accordance with any one of claims 1 through 20, said printing device being an inkjet printer.

22. An output device that outputs picture images and characters, said output device comprising:
an image plane information storage module that stores information, which regards multiple image planes having different information volumes per pixel, in memory regions allocated to the multiple image planes;
a drawing editing module that draws selected part of the picture images and the characters on each of the multiple image planes accompanied with storage of data representing the selected part of the picture images and the characters in a corresponding memory region allocated to the image plane, and edits the selected part of the picture images and the characters drawn on the image plane;
a display data generation module that combines the multiple image planes to one composite display window, based on the information stored in said image plane information storage module, and generates display data representing the composite display window; and
an output data generation module that combines at least two image planes out of the multiple image planes to one composite output window, based on the information stored in said image plane information storage module, and generates output data representing the composite output window.

23. An output device in accordance with claim 22, wherein the multiple image planes include a picture image plane having the information volume per pixel set to a first information volume for drawing a color picture image, and a character image plane having the information volume per pixel set to a second information volume, which is lower than the first information volume, for drawing at least either of a character and a simple illustration, and
said output data generation module combines at least the picture image plane with the character image plane to the composite output window and generates the output data representing the composite output window.

24. An output device in accordance with claim 23, wherein said display data generation module lays the character image plane on the picture image plane to the composite display window and generates the display data representing the composite display window, and
said output data generation module lays the character image plane on the picture image plane to the composite output window and generates the output data representing the composite output window.

25. An output device in accordance with either one of claims 23 and 24, wherein the multiple image planes further include an operation image plane for drawing information on a device operation,
said display data generation module lays the operation image plane as an upper-most layer of the composite display window and generates the display data representing the composite display window, and
said output data generation module combines the image planes other than the operation image plane to the composite output window and generates the output data representing the composite output window.

26. An output device in accordance with any one of claims 22 through 25, wherein said drawing editing module allocates plural drawing objects, such as picture images and characters, to the multiple image planes and generates a script file described in a language of selected format with regard to the allocation of the plural drawing objects, and
said output data generation module analyzes the script file to generate the output data.

27. An output device in accordance with any one of claims 22 through 26, wherein said display data generation module converts pixel information on each pixel in each of the multiple image planes into corresponding pixel information of a maximum information volume per pixel adopted in at least one image plane among the multiple image planes having the different information volumes per pixel, and generates the display data representing the composite display window.

28. An output device in accordance with any one of claims 22 through 27, wherein said output data generation module converts pixel information on each pixel in each of the multiple image planes into corresponding pixel information of a maximum information volume per pixel adopted in at least one image plane among the multiple image planes having the different information volumes per pixel, and generates the output data representing the composite output window.

29. A printing device that prints picture images and characters on a printing medium, such as paper, said printing device comprising:
an image plane information storage module that includes a graphical image plane region for storage of information regarding a graphical image plane usable to draw a color image thereon, and a print setting image plane region for storage of information regarding a print setting image plane usable to set a printing area and a non-printing area;
a drawing editing module that draws the picture images and the characters on the graphical image plane accompanied with storage of data representing the picture images and the characters in the graphical image plane region included in said image plane information storage module, and edits the picture images and the characters drawn on the graphical image plane;
a printing area specification module that sets a printing area on the print setting image plane accompanied with storage of data representing the set printing area in the print setting image plane region included in said image plane information storage module;
a display data generation module that generates display data representing a display window, which enables a user to visually check contents drawn on the graphical image plane and the printing area set on the print setting image plane based on the information stored in said image plane information storage module; and
a print data generation module that generates print data representing a print window having at least part of the contents, which are drawn on the graphical image plane based on the information stored in said image plane information storage module and are included in a specific area corresponding to the printing area set on the print setting image plane.

30. A printing device in accordance with claim 29, wherein the print setting image plane is capable of setting each pixel as either a printing pixel or a non-printing pixel.

31. A printing device in accordance with claim 30, wherein the print setting image plane has an information volume per pixel set to 1 bit.

32. A printing device in accordance with either one of claims 30 and 31, wherein said print data generation module deletes data of each specific pixel among all pixels in the graphical image plane, which corresponds to each non-printing pixel set on the print setting image plane, sets the graphical image plane with data deletion to the print window, and generates the print data representing the set print window.

33. A printing device in accordance with claim 32, wherein said print data generation module combines the graphical image plane with the print setting image plane to keep or delete data of each pixel in the graphical image plane, sets the combined image planes to the print window, and generates the print data representing the set print window.

34. A printing device in accordance with any one of claims 29 through 33, wherein said display data generation module combines a boundary of the printing area set on the print setting image plane with the graphical image plane, sets the combined image plane with the boundary of the printing area to the display window, and generates the display data representing the set display window.

35. A printing device in accordance with claim 34, wherein said display data generation module combines the boundary of the printing area set on the print setting image plane with the graphical image plane, controls a non-printing area outside the boundary of the printing area to be unclear, sets the combined image plane with the boundary of the printing area and the unclear non-printing area to the display window, and generates the display data representing the set display window.

36. A printing device in accordance with any one of claims 29 through 35, wherein the graphical image plane includes multiple image planes having different information volumes per pixel,
the graphical image plane region includes multiple image plane regions for storage of information regarding each of the multiple image planes,
said drawing editing module draws selected part of the picture images and the characters on each of the multiple image planes accompanied with storage of data representing the selected part of the picture images and the characters in each corresponding image plane region, and edits the selected part of the picture images and the characters drawn on the image plane,
said display data generation module combines the multiple image planes to one composite image plane, sets the composite image plane to the graphical image plane, and generates the display data based on the graphical image plane, and
said print data generation module combines the multiple image planes to the composite image plane, sets the composite image plane to the graphical image plane, and generates the print data based on the graphical image plane.

37. A printing device in accordance with claim 36, wherein the graphical image plane includes a picture image plane having the information volume per pixel set to a first information volume for drawing a color picture image, and a character image plane having the information volume per pixel set to a second information volume, which is lower than the first information volume, for drawing at least either of a character and a simple illustration.

38. A printing device in accordance with claim 37, wherein said display data generation module lays the character image plane on the picture image plane to a composite image plane, sets the composite image plane to the graphical image plane, and generates the display data based on the graphical image plane, and
said print data generation module lays the character image plane on the picture image plane to the composite image plane, sets the composite image plane to the graphical image plane, and generates the print data based on the graphical image plane.

39. A printing device in accordance with either one of claims 37 and 38, wherein the first information volume is 4 bytes, and the second information volume is 1 byte.

40. A printing device in accordance with any one of claims 37 through 39, wherein said drawing editing module, in response to an image drawing instruction, sets a movable outer frame for image layout on the character image plane and draws a picture image in a specific area on the picture image plane corresponding to the outer frame.

41. A printing device in accordance with any one of claims 37 through 40, wherein said drawing editing module, in response to an image layout change instruction, displays an outer frame for image layout at a specific position on the character image plane, which corresponds to contour of a picture image drawn on the picture image plane, changes the displayed outer frame for image layout, and redraws the picture image in a specific area on the picture image plane corresponding to the changed outer frame.

42. A printing device in accordance with any one of claims 29 through 41, wherein said image plane information storage module includes an operation image plane region for storage of information regarding an operation image plane for drawing information on a device operation, and
said display data generation module combines the operation image plane with the display window, which enables the user to visually check the contents drawn on the graphical image plane and the printing area set on the print setting image plane based on the information stored in said image plane information storage module, to a combined display window and generates the display data representing the combined display window.

43. A printing device in accordance with claim 42, wherein the operation image plane has an information volume per pixel set to 4 bits.

44. A printing device in accordance with any one of claims 29 through 43, wherein said drawing editing module allocates at least one drawing object, such as a picture image or a character, to the graphical image plane and generates a script file described in a language of selected format with regard to the allocation of the at least one drawing object, and
said print data generation module analyzes the script file to generate the print data.

45. A printing device in accordance with claim 44, wherein said drawing editing module describes the allocation of the at least one drawing object to the graphical image plane and generates the script file.

46. A printing device in accordance with either one of claims 44 and 45, wherein the script file has description of information, which includes object identification information identifying each of the plural drawing objects to be drawn on the multiple image planes and layout information representing a layout of the plural drawing objects on the multiple image planes.

47. A printing device in accordance with any one of claims 44 through 46, wherein said display data generation module analyzes the script file to generate the display data.

48. An output device that outputs picture images and characters, said output device comprising:
an image plane information storage module that includes a graphical image plane region for storage of information regarding a graphical image plane usable to draw a color image thereon, and an output setting image plane region for storage of information regarding an output setting image plane usable to set an output area and a non-output area;
a drawing editing module that draws the picture images and the characters on the graphical image plane accompanied with storage of data representing the picture images and the characters in the graphical image plane region included in said image plane information storage module, and edits the picture images and the characters drawn on the graphical image plane;
an output area specification module that sets an output area on the output setting image plane accompanied with storage of data representing the set output area in the output setting image plane region included in said image plane information storage module;
a display data generation module that generates display data representing a display window, which enables a user to visually check contents drawn on the graphical image plane and the output area set on the output setting image plane based on the information stored in said image plane information storage module; and
an output data generation module that generates output data representing an output window having at least part of the contents, which are drawn on the graphical image plane based on the information stored in said image plane information storage module and are included in a specific area corresponding to the output area set on the output setting image plane.

49. An output device in accordance with claim 48, wherein the output setting image plane is capable of setting each pixel as either an output pixel or a non-output pixel.

50. An output device in accordance with claim 49, wherein said output data generation module deletes data of each specific pixel among all pixels in the graphical image plane, which corresponds to each non-output pixel set on the output setting image plane, sets the graphical image plane with data deletion to the output window, and generates the output data representing the set output window.

51. An output device in accordance with claim 50, wherein said output data generation module combines the graphical image plane with the output setting image plane to keep or delete data of each pixel in the graphical image plane, sets the combined image planes to the output window, and generates the output data representing the set output window.

52. An output device in accordance with any one of claims 48 through 51, wherein said display data generation module combines a boundary of the output area set on the output setting image plane with the graphical image plane, sets the combined image plane with the boundary of the output area to the display window, and generates the display data representing the set display window.

53. An output device in accordance with any one of claims 48 through 52, wherein the graphical image plane includes multiple image planes having different information volumes per pixel,
the graphical image plane region includes multiple image plane regions for storage of information regarding each of the multiple image planes,
said drawing editing module draws selected part of the picture images and the characters on each of the multiple image planes accompanied with storage of data representing the selected part of the picture images and the characters in each corresponding image plane region, and edits the selected part of the picture images and the characters drawn on the image plane,
said display data generation module combines the multiple image planes to one composite image plane, sets the composite image plane to the graphical image plane, and generates the display data based on the graphical image plane, and
said output data generation module combines the multiple image planes to the composite image plane, sets the composite image plane to the graphical image plane, and generates the output data based on the graphical image plane.

54. An output device in accordance with any one of claims 48 through 53, wherein said image plane information storage module includes an operation image plane region for storage of an operation image plane for drawing information on a device operation, and
said display data generation module combines the operation image plane with the display window, which enables the user to visually check the contents drawn on the graphical image plane and the printing area set on the print setting image plane based on the information stored in said image plane information storage module, to a combined display window and generates the display data representing the combined display window.

55. An output device in accordance with any one of claims 48 through 54, wherein said drawing editing module allocates at least one drawing object, such as a picture image or a character, to the graphical image plane and generates a script file described in a language of selected format with regard to the allocation of the at least one drawing object, and
said output data generation module analyzes the script file to generate the output data.

56. An output method that outputs picture images and characters, said output method comprising the steps of:
(a) storing information, which regards multiple image planes having different information volumes per pixel, in memory regions allocated to the multiple image planes;
(b) drawing selected part of the picture images and the characters on each of the multiple image planes accompanied with storage of data representing the selected part of the picture images and the characters in a corresponding memory region allocated to the image plane, and editing the selected part of the picture images and the characters drawn on the image plane;
(c) combining the multiple image planes to one composite display window, based on the stored information, and generating display data representing the composite display window; and
(d) combining at least two image planes out of the multiple image planes to one composite output window, based on the stored information, and generating output data representing the composite output window.

57. An output method in accordance with claim 56, wherein the multiple image planes include a picture image plane having the information volume per pixel set to a first information volume for drawing a color picture image, and a character image plane having the information volume per pixel set to a second information volume, which is lower than the first information volume, for drawing at least either of a character and a simple illustration, and
said step (d) combines at least the picture image plane with the character image plane to the composite output window and generates the output data representing the composite output window.

58. An output method in accordance with claim 57, wherein said step (c) lays the character image plane on the picture image plane to the composite display window and generates the display data representing the composite display window, and
said step (d) lays the character image plane on the picture image plane to the composite output window and generates the output data representing the composite output window.

59. An output method in accordance with either one of claims 57 and 58, wherein the multiple image planes further include an operation image plane for drawing information on a device operation,
said step (c) lays the operation image plane as an upper-most layer of the composite display window and generates the display data representing the composite display window, and
said step (d) combines the image planes other than the operation image plane to the composite output window and generates the output data representing the composite output window.

60. An output method in accordance with any one of claims 56 through 59, wherein said step (b) allocates plural drawing objects, such as picture images and characters, to the multiple image planes and generates a script file described in a language of selected format with regard to the allocation of the plural drawing objects, and
said step (d) analyzes the script file to generate the output data.

61. An output method in accordance with any one of claims 56 through 60, wherein said step (c) converts pixel information on each pixel in each of the multiple image planes into corresponding pixel information of a maximum information volume per pixel adopted in at least one image plane among the multiple image planes having the different information volumes per pixel, and generates the display data representing the composite display window.

62. An output method in accordance with any one of claims 56 through 61, wherein said step (d) converts pixel information on each pixel in each of the multiple image planes into corresponding pixel information of a maximum information volume per pixel adopted in at least one image plane among the multiple image planes having the different information volumes per pixel, and generates the output data representing the composite output window.

63. An output method in accordance with any one of claims 56 through 62, wherein said step (d) prints out the generated output data on a medium, such as paper.

64. An output method that outputs picture images and characters, said output method comprising the steps of:
(a) setting a graphical image plane region for storage of information regarding a graphical image plane usable to draw a color image thereon, and an output setting image plane region for storage of information regarding an output setting image plane usable to set an output area and a non-output area;
(b) drawing the picture images and the characters on the graphical image plane accompanied with storage of data representing the picture images and the characters in the graphical image plane region, and editing the picture images and the characters drawn on the graphical image plane;
(c) setting an output area on the output setting image plane accompanied with storage of data representing the set output area in the output setting image plane region;
(d) generating display data representing a display window, which enables a user to visually check contents drawn on the graphical image plane and the output area set on the output setting image plane based on stored the information; and
(e) generating output data representing an output window having at least part of the contents, which are drawn on the graphical image plane based on the stored information and are included in a specific area corresponding to the output area set on the output setting image plane.

65. An output method in accordance with claim 64, wherein the output setting image plane is capable of setting each pixel as either an output pixel or a non-output pixel, and
said step (e) deletes data of each specific pixel among all pixels in the graphical image plane, which corresponds to each non-output pixel set on the output setting image plane, sets the graphical image plane with data deletion to the output window, and generates the output data representing the set output window.

66. An output method in accordance with claim 65, wherein said step (e) combines the graphical image plane with the output setting image plane to keep or delete data of each pixel in the graphical image plane, sets the combined image planes to the output window, and generates the output data representing the set output window.

67. An output method in accordance with any one of claims 64 through 66, wherein said step (d) combines a boundary of the output area set on the output setting image plane with the graphical image plane, sets the combined image plane with the boundary of the output area to the display window, and generates the display data representing the set display window.

68. An output method in accordance with any one of claims 64 through 67, wherein the graphical image plane includes multiple image planes having different information volumes per pixel,
the graphical image plane region includes multiple image plane regions for storage of information regarding each of the multiple image planes,
said step (b) draws selected part of the picture images and the characters on each of the multiple image planes accompanied with storage of data representing the selected part of the picture images and the characters in each corresponding image plane region, and edits the selected part of the picture images and the characters drawn on the image plane,
said step (d) combines the multiple image planes to one composite image plane, sets the composite image plane to the graphical image plane, and generates the display data based on the graphical image plane, and
said step (e) combines the multiple image planes to the composite image plane, sets the composite image plane to the graphical image plane, and generates the output data based on the graphical image plane.

69. An output method in accordance with any one of claims 64 through 68, wherein said step (a) sets an operation image plane region for storage of an operation image plane for drawing information on a device operation, and
said step (d) combines the operation image plane with the display window, which enables the user to visually check the contents drawn on the graphical image plane and the output area set on the output setting image plane based on the stored information, to a combined display window and generates the display data representing the combined display window.

70. An output method in accordance with any one of claims 64 through 68, wherein said step (b) allocates at least one drawing object, such as a picture image or a character, to the graphical image plane and generates a script file described in a language of selected format with regard to the allocation of the at least one drawing object, and
said step (e) analyzes the script file to generate the output data.

71. An output method in accordance with any one of claims 64 through 70, wherein said step (e) prints out the generated output data on a medium, such as paper.

72. A program that is applied to an output device equipped with a storage unit, said program comprising:
a module of storing information, which regards multiple image planes having different information volumes per pixel, in memory regions allocated to the multiple image planes in the storage unit;
a module of drawing selected part of the picture images and the characters on each of the multiple image planes accompanied with storage of data representing the selected part of the picture images and the characters in a corresponding memory region allocated to the image plane, and editing the selected part of the picture images and the characters drawn on the image plane;
a module of combining the multiple image planes to one composite display window, based on the stored information, and generating display data representing the composite display window; and
a module of combining at least two image planes out of the multiple image planes to one composite output window, based on the stored information, and generating output data representing the composite output window.

73. A program that is applied to an output device equipped with a storage unit, said program comprising:
a module of setting a graphical image plane region for storage of information regarding a graphical image plane usable to draw a color image thereon, and an output setting image plane region for storage of information regarding an output setting image plane usable to set an output area and a non-output area in the storage unit;
a module of drawing the picture images and the characters on the graphical image plane accompanied with storage of data representing the picture images and the characters in the graphical image plane region, and editing the picture images and the characters drawn on the graphical image plane;
a module of setting an output area on the output setting image plane accompanied with storage of data representing the set output area in the output setting image plane region;
a module of generating display data representing a display window, which enables a user to visually check contents drawn on the graphical image plane and the output area set on the output setting image plane based on stored the information; and
a module of generating output data representing an output window having at least part of the contents, which are drawn on the graphical image plane based on the stored information and are included in a specific area corresponding to the output area set on the output setting image plane.

74. A script generation method for printing image data in a preset layout on a medium, such as paper, said script generation method comprising the steps of:
editing image data;
displaying the edited image data; and
generating a script that is structured to describe the displayed image data,
wherein the script is generated according to the preset layout for printing.

75. A script generation method in accordance with claim 74, wherein subject image data of editing has a lower resolution than a resolution of original image data.

76. A script generation method in accordance with claim 75, wherein the script describes a location of the original image data.

77. An output method that outputs image data in a preset layout on a medium, such as paper, said output method comprising the steps of:
receiving a script that is structured to describe image data displayed on a display window;
analyzing the received script;
generating output data, based on a result of the analysis; and
outputting the generated output data.

78. An output method that outputs image data in a preset layout on a medium, such as paper, said output method comprising the steps of:
receiving a script that is structured to describe image data;
analyzing the script;
retrieving a location of a target correction image to be corrected in the script;
correcting the target correction image specified by the script; and
generating a composite output window, based on results of the analysis and correction,
wherein said correction step corrects the target correction image after the retrieval of the location of the target correction image but before a start of generating the composite output window.

79. An image data editing method that edits image data on a specific monitor, said image data editing method comprising the steps of:
utilizing one input device to specify a working input device used for editing;
sending editable image data to an output device; and
editing the image data sent to and stored in the output device on a monitor of another input device,
said image data editing method sending the editable image data to the output device without generating output data that does not require any further processing prior to output by the output device.
